# EUROPEAN PATENT APPLICATION

(11) **EP 4 797 750 A1**
(43) Date of publication of application: **26.08.2026**
(21) Application number: 24884715.4
(22) Date of filing: 29.10.2024
(51) Int. Cl.: H04W 12/03, H04W 12/02, H04W 12/72, H04L 9/08, H04L 9/40, H04W 12/04

(54) **COMMUNICATION METHOD AND APPARATUS, AND READABLE STORAGE MEDIUM**

(30) Priority: 30.10.2023 CN 202311435075
(71) Applicant: HUAWEI TECHNOLOGIES CO., LTD., Shenzhen 518129 (CN)
(72) Inventor: LI, Lun, Shenzhen, Guangdong 518129 (CN); GUO, Longhua, Shenzhen, Guangdong 518129 (CN); WU, Yizhuang, Shenzhen, Guangdong 518129 (CN); LI, He, Shenzhen, Guangdong 518129 (CN); GUO, Tao, Shenzhen, Guangdong 518129 (CN)
(74) Representative: Pfenning, Meinig & Partner mbB
(86) International application number: PCT/CN2024/128035
(87) International publication number: WO 2025/092712

(57) **Abstract**

This application relates to the field of communication technologies, and in particular, to a communication method, a communication apparatus, and a readable storage medium. The method includes: An AMF/TMF generates a nonce and sends it to an IoT device; the IoT device generates a ciphertext based on the nonce, its own serial number, and a preconfigured symmetric key, and then generates an SUCI based on the ciphertext and a key identifier (used to index the symmetric key); and the IoT device sends the SUCI to the AMF/TMF for identity protection of the IoT device. This application enables the protection of a permanent identifier of the IoT device while meeting its power consumption requirements, thereby improving device security.

## Description

This application claims priority to Chinese Patent Application No. 202311435075.8, filed with the China National Intellectual Property Administration on October 30, 2023 and entitled "COMMUNICATION METHOD, COMMUNICATION APPARATUS, AND READABLE STORAGE MEDIUM", which is incorporated herein by reference in its entirety.

### TECHNICAL FIELD

This application relates to the field of communication technologies, and in particular, to a communication method, a communication apparatus, and a readable storage medium.

### BACKGROUND

In recent years, the internet of things (internet of things, IoT) has attracted wide attention in the field of wireless communication. By connecting a growing number of IoT devices, it is possible to improve productivity and quality of life. Reducing the size, complexity, and power consumption of IoT devices allows for deployment of tens of billions or even hundreds of billions of IoT devices across a wide range of applications, offering more added value. Most existing wireless communication devices are powered by batteries that require manual replacement or recharging. Relying on such batteries for IoT devices leads to high maintenance costs, environmental concerns, and in some use cases (such as wireless sensors in the electric power and oil & gas industries), potential safety hazards.

Therefore, there is a need for a new IoT technology to support battery-free devices with no energy storage capacity, or energy storage devices that do not require manual replacement or recharging. One proposed approach involves harvesting energy from the environment, for example, by collecting radio waves, light, motion, heat, or any other suitable sources, to power devices with limited or no energy storage capacity (such as those using capacitors). These devices, limited in size and complexity, typically operate with harvested power in the range of 1 µW (microwatt) to several hundred microwatts. Due to their limited energy storage capacity and low output power of energy harvesting, these devices are required to operate with low power consumption.

For devices with limited or no energy storage capacity, as well as low-power or low-computing-power devices, security poses a critical challenge.

### SUMMARY

Embodiments of this application provide a communication method, a communication apparatus, and a readable storage medium, designed to protect a permanent identifier of low-power or low-computing-power devices while meeting their power consumption requirements, thereby improving their overall security.

The following describes this application from different aspects. It should be understood that the following implementations and beneficial effects of different aspects may be mutually referenced.

According to a first aspect, this application provides a communication method. The method includes: A terminal device receives a first message, where the first message includes a first random number (nonce); the terminal device generates a ciphertext based on the first random number, a serial number (serial number) of the terminal device, and a first key, and generates a subscription concealed identifier (subscription concealed identifier, SUCI) based on a key identifier and the ciphertext; and the terminal device sends a second message to a first network element. The key identifier may be used by (the terminal device and another network element) to index the preconfigured first key. For example, the SUCI may be used for identity protection of the terminal device, and may be used for subsequent authentication and key agreement (authentication and key agreement, AKA).

For example, the serial number of the terminal device may be a serial number of the terminal device, or may be a serial number of a subscriber identity module (subscriber identity module, SIM) card in the terminal device, for example, a mobile subscriber identification number (mobile subscriber identification number, MSIN).

For example, the terminal device in this application may be an IoT device, for example, an ambient IoT (Ambient IoT, A-IoT) device, a passive IoT (Passive IoT, P-IoT) device, a smart tag, a passive tag, an active tag, or an industrial control element. The IoT device in this application may have low power consumption, low computing power, or limited energy storage capacity. The first network element in this application may be an access and mobility management function (access and mobility management function, AMF) or a tag management function (tag management function, TMF). The tag management function (TMF) may be understood as an AMF that performs dedicated management on a tag, and may be deployed in a toB (to business) park.

For example, the first key may be preconfigured in the terminal device.

For example, the first key may be a key of a symmetric encryption algorithm, or the first key may also be referred to as a symmetric key. Symmetric key encryption is also referred to as dedicated key encryption or shared key encryption. That is, a key used by a data sender to encrypt plaintext is the same as a key used by a data receiver to decrypt a corresponding ciphertext. Specifically, the first key is further used by a network side to decrypt the ciphertext. The symmetric encryption algorithm includes but is not limited to: an advanced encryption standard (advanced encryption standard, AES) algorithm, a Robin Montgomery algorithm (Robin Montgomery algorithm, ROMAN), Zuchongzhi algorithm (Zuchongzhi algorithm) ZUC-128, a ZUC stream cipher (ZUC stream cipher), or AES-128.

It may be understood that values of the key used by the terminal device to encrypt the plaintext is the same as the key used by the network side to decrypt the ciphertext. For ease of understanding of this application, the two keys are both referred to as the first key. Certainly, in actual application, the two keys may alternatively be distinguished as different keys, for example, a key 1 and a key 2, and values of the key 1 and the key 2 are the same.

It may be understood that, because power consumption of the IoT device is usually very small, the IoT device cannot be applied to a public key encryption mechanism (for example, an elliptic curve integrated encryption scheme) in an existing cellular communication system. This is because in an existing UE identity authentication process, a public key needs to be dynamically generated, and a serial number of UE needs to be encrypted by using the public key. However, a generation manner and an encryption manner of the public key are complex and energy-intensive. Therefore, a security protection scheme in the existing cellular communication system cannot be directly applied to the IoT device.

Therefore, the terminal device in this application encrypts the serial number (Serial Number) of the terminal device by using the first key, and adds the key identifier of the first key to the SUCI, so that a network element on the network side may also use the same first key for decryption. A public key does not need to be dynamically generated to protect the serial number of the terminal device, that is, the serial number of the terminal device is protected by using a symmetric key. This enables the protection of a permanent identifier of a low-power or low-computing-power device (such as an IoT device) while meeting its power consumption requirements, thereby improving device security.

In addition, in this application, the first random number (nonce) is added to a ciphertext generation process, so that freshness of the ciphertext or the key can be increased, making it impossible for an attacker to decrypt the ciphertext to obtain the serial number of the terminal device even if the attacker has the symmetric key (for example, the first key), thereby further improving security and reducing replay attacks on the network side.

With reference to the first aspect, in a possible implementation, the SUCI is further generated based on one or more of the following: a type of a subscription permanent identifier (subscription permanent identifier, SUPI), a home network identifier of the terminal device, the first random number, or a message authentication code. In other words, in addition to the key identifier and the ciphertext, the terminal device may further generate the SUCI based on one or more of the following: the type of the SUPI, the home network identifier of the terminal device, the first random number, or the message authentication code.

With reference to the first aspect, in a possible implementation, the ciphertext is further generated based on a second random number (RAND). The second random number may be generated by the terminal device. In other words, when generating the ciphertext, the terminal device may further add the second random number (RAND) to the ciphertext generation process. It may be understood that random numbers may be classified into pseudo random numbers and true random numbers. For example, the first random number (nonce) may be a true random number, and the second random number (RAND) may be a pseudo random number.

In this application, the second random number (RAND) is added to the ciphertext generation process, so that randomness of the ciphertext (cipher) can be increased, thereby further improving security.

With reference to the first aspect, in a possible implementation, the ciphertext is obtained by encrypting, based on a second key, a concatenation of the serial number of the terminal device and the second random number. The second key is generated based on the first key and the first random number.

With reference to the first aspect, in a possible implementation, the ciphertext is obtained by encrypting, based on the first key, a concatenation of the serial number of the terminal device, the second random number, and the first random number.

With reference to the first aspect, in a possible implementation, the second message includes the first random number. For example, the first random number is carried in the SUCI. For example, the first random number is carried as an information element in the second message.

In this application, the second message carries the first random number, so that the first network element can verify validity of the first random number, thereby reducing replay attacks on the network side and improving security.

With reference to the first aspect, in a possible implementation, the first message may be a selection message, and the selection message is used to trigger an access procedure of the terminal device. For example, the selection message may be a beam that enables the terminal device to obtain energy, so as to perform a subsequent access procedure. For example, the selection message may be a system information broadcast (system information broadcast, SIB) message, and may be used by an access network device (for example, a base station) to select a terminal device to perform a subsequent access procedure via broadcast.

In this application, the nonce is notified by using the selection message (for example, the SIB message), so that random numbers are configured for the terminal in batches, thereby reducing signaling overheads on the network side.

With reference to the first aspect, in a possible implementation, the first message may be a random access response or a radio resource control connection setup message in an access procedure. Alternatively, the first message may be a non-access stratum (Non-access stratum, NAS) message. When the first message is the NAS message, the first message may be sent by the first network element to the access network device, and then forwarded by the access network device to the terminal device.

With reference to the first aspect, in a possible implementation, before the terminal device receives the first message, the method further includes: The terminal device receives a third message from an application function (application function, AF), where the third message includes the key identifier and the first key. In other words, the key identifier and the first key that are used by the terminal device may be configured by the AF.

According to a second aspect, this application provides a communication method. The method includes: A first network element sends a first random number to a terminal device through an access network device, where the first random number is used by (the terminal device) to generate a ciphertext; the first network element receives a second message from the terminal device, where the second message includes an SUCI; and the first network element sends an authentication request to a second network element, where the authentication request includes the SUCI. The SUCI may be used for identity protection of the terminal device. The SUCI may be generated based on a key identifier and the ciphertext. The key identifier may be used to index a first key. The first key may be used to decrypt the ciphertext to obtain a serial number of the terminal device. The second network element may be determined based on a home network identifier of the terminal device in the SUCI.

For example, the first random number is generated by the first network element.

For example, the second network element in this application may be an authentication credential repository and processing function (authentication credential repository and processing function, ARPF) or a unified data management (unified data management, UDM) function.

After receiving the second message (the second message includes the SUCI) from the terminal device, the first network element in this application sends the SUCI to the second network element by using the authentication request, so that the second network element authenticates the terminal device to confirm an identity of the terminal device, thereby improving security of the terminal device.

With reference to the second aspect, in a possible implementation, before the first network element sends the first random number to the terminal device through the access network device, the method further includes: The first network element receives a service request from an AF, where the service request includes a service indication or terminal device identification information. The service indication or the terminal device identification information may be used to determine the terminal device. For a specific determining manner, refer to descriptions in the following method embodiments. Details are not described herein. For example, the service request may be used to request some terminal devices to perform some operations. For example, the service request is used to request terminal devices whose terminal device identifiers are in a specific range to perform operations such as inventory or temperature measurement. Therefore, after receiving the service request, the first network element may determine corresponding terminal devices based on the service request, and send the first random number to these terminal devices, so that these terminal devices generate a ciphertext based on the first random number to perform authentication. For ease of description, one terminal device is used as an example for description in this application.

In this application, one service request is used to trigger the first network element to send the first random number to some terminal devices, so that flexibility of the solution can be improved, and no operation needs to be performed on all terminal devices in a network.

With reference to the second aspect, in a possible implementation, after receiving the first random number, the terminal device may generate the ciphertext based on the first random number, the serial number (serial number) of the terminal device, and the first key, and generate the SUCI based on the key identifier and the ciphertext. Then, the terminal device sends, to the first network element, the second message that carries the SUCI.

For example, in addition to the key identifier and the ciphertext, the terminal device may further generate the SUCI based on one or more of the following: a type of the SUPI, the home network identifier of the terminal device, the first random number, or a message authentication code.

With reference to the second aspect, in a possible implementation, the second message includes the first random number. For example, the first random number is carried in the SUCI. For example, the first random number is carried as an information element in the second message.

With reference to the second aspect, in a possible implementation, when the first network element determines that the first random number included in the second message is valid, the first network element sends the authentication request to the second network element. The authentication request may be used to request to authenticate the terminal device, to confirm an identity of the terminal device. For a manner of determining that the first random number included in the second message is valid, refer to descriptions in the following method embodiments. Details are not described herein. In this application, the first network element sends the authentication request when the first random number is valid, so that security can be further improved.

With reference to the second aspect, in a possible implementation, after receiving the authentication request, the second network element may decrypt the ciphertext by using the first key indexed by the key identifier, to obtain the serial number of the terminal device; and then determine the SUPI of the terminal device based on the serial number of the terminal device. For a specific manner of determining the SUPI, refer to descriptions in the following method embodiments. Details are not described herein. The SUPI may be used to subsequently perform an AKA mechanism.

With reference to the second aspect, in a possible implementation, the authentication request further includes one or more of the following: indication information or the first random number. The indication information may indicate that the SUCI is an identifier of a low-power device or a low-computing-power device.

In this application, the indication information is carried in the authentication request, which is clear in meaning and facilitates the second network element in distinguishing whether the authentication request is for a cellular device, a low-power device, or a low-computing-power device. This helps the second network element determine behavior after the authentication request is received.

According to a third aspect, this application provides a communication method. The method includes: A second network element receives an authentication request from a first network element, where the authentication request includes an SUCI, the SUCI is generated based on a key identifier and a ciphertext, and the key identifier is used to index a first key; and the second network element decrypts the ciphertext by using the first key to obtain a serial number of a terminal device, and determines an SUPI of the terminal device based on the serial number of the terminal device. The SUPI may be used to subsequently perform an AKA mechanism.

For example, the first key may be preconfigured in the second network element.

In this application, the second network element decrypts the ciphertext in the SUCI by using the first key to obtain the serial number of the terminal device. A key used by the second network element for decryption is the same as a key used by the terminal device to encrypt the serial number of the terminal device, that is, the serial number of the terminal device is protected by using a symmetric key. This enables the protection of a permanent identifier of a low-power or low-computing-power device (such as an IoT device) while meeting its power consumption requirements, thereby improving device security.

With reference to the third aspect, in a possible implementation, that the second network element determines the SUPI of the terminal device based on the serial number of the terminal device includes: The second network element recombines and concatenates the serial number (Serial Number) of the terminal device with plaintext in the SUCI, and/or another parameter (which may be content other than the plaintext in the SUCI), to obtain the SUPI of the terminal device.

For example, the plaintext in the SUCI includes one or more of the following: a type of the SUPI, a home network identifier of the terminal device, a routing indicator (Routing Indicator), the key identifier k1, or the first random number (nonce). The another parameter includes a mobile country code (mobile country code, MCC) and/or a mobile network code (mobile network code, MNC).

With reference to the third aspect, in a possible implementation, after the second network element decrypts the ciphertext by using the first key to obtain the serial number of the terminal device, the method further includes: The second network element generates an authentication vector based on a master key corresponding to the SUPI, and performs an authentication and key agreement AKA mechanism. It may be understood that, in the AKA mechanism, the SUPI corresponds to one master key, and a cipher key (cipher key, CK) and an integrity key (integrity key, IK) may be derived based on the master key for subsequent communication assurance.

With reference to the third aspect, in a possible implementation, before the second network element generates the authentication vector based on the master key corresponding to the SUPI, the method further includes: The second network element determines, based on a preconfigured correspondence between the key identifier and the SUPI, that the SUPI is valid; and when the SUPI is valid, the second network element generates the authentication vector based on the master key corresponding to the SUPI.

With reference to the third aspect, in a possible implementation, before the second network element receives the authentication request from the first network element, the method further includes: The second network element receives a key generation request from an AF, where the key generation request includes the key identifier; the second network element generates one or more keys based on the key identifier; and the second network element sends a key generation response to the AF, where the key generation response includes the one or more keys, and the one or more keys include the first key.

For example, the key generation request further includes one or more home network identifiers, and the one or more home network identifiers are used to generate the one or more keys with reference to the key identifier.

According to a fourth aspect, this application provides a communication method. The method includes: A first network element sends a first random number to a terminal device through an access network device, where the first random number is used by (the terminal device) to generate a ciphertext; the first network element receives a second message from the terminal device, where the second message includes an SUCI, and the SUCI is generated based on a key identifier and the ciphertext; the first network element obtains, from a key storage network element based on the key identifier, a key factor used to derive a first key, and determines the first key based on the key factor and the first random number; the first network element decrypts the ciphertext in the SUCI by using the first key to obtain a serial number of the terminal device, and determines an SUPI of the terminal device based on the serial number of the terminal device. The SUPI may be used to subsequently perform an AKA mechanism.

In this application, the first network element decrypts the ciphertext in the SUCI by using the first key to obtain the serial number of the terminal device. A key used by the first network element for decryption is the same as a key used by the terminal device to encrypt the serial number of the terminal device, that is, the serial number of the terminal device is protected by using a symmetric key. This application enables the protection of a permanent identifier of a low-power or low-computing-power device (such as an IoT device) while meeting its power consumption requirements, thereby improving device security.

With reference to the fourth aspect, in a possible implementation, after the first network element receives the second message from the terminal device, the first network element may split the SUCI in the second message, to obtain the key identifier and the ciphertext (cipher).

With reference to the fourth aspect, in a possible implementation, before the first network element sends the first random number to the terminal device through the access network device, the method further includes: The first network element receives a service request from an AF, where the service request includes a service indication or terminal device identification information, and the service request further includes the key identifier. For example, the service request may be used to request some terminal devices to perform some operations. For example, the service request is used to request terminal devices whose terminal device identifiers are in a specific range to perform operations such as inventory or temperature measurement. The key identifier may be used to obtain the key factor used to derive the first key. The service indication or the terminal device identification information may be used to determine the terminal device. For a specific determining manner, refer to descriptions in the following method embodiments. Details are not described herein.

With reference to the fourth aspect, in a possible implementation, that the first network element determines the first key based on the key factor and the first random number includes: The first network element determines one or more valid random numbers, and determines one or more keys based on the key factor and the one or more random numbers; and the first network element decrypts the ciphertext based on the one or more keys, and determines a key that successfully decrypts the ciphertext as the first key. In other words, the first network element may make a plurality of decryption attempts, and obtain the serial number of the terminal device when the decryption succeeds.

For example, the first network element may further determine the one or more keys based on the key factor, the key identifier, and the one or more random numbers.

In this application, when the second message does not carry the first random number (nonce), the first network element may also decrypt the ciphertext through a plurality of attempts, which can save air interface resources, and is beneficial for a low-power/low-computing-power device.

With reference to the fourth aspect, in a possible implementation, after receiving the first random number, the terminal device may generate the ciphertext based on the first random number, the serial number (serial number) of the terminal device, and the first key, and generate the SUCI based on the key identifier and the ciphertext. Then, the terminal device sends, to the first network element, the second message that carries the SUCI.

For example, in addition to the key identifier and the ciphertext, the terminal device may further generate the SUCI based on one or more of the following: a type of the SUPI, a home network identifier of the terminal device, the first random number, or a message authentication code.

With reference to the fourth aspect, in a possible implementation, after the first network element determines the SUPI of the terminal device based on the serial number of the terminal device, the method further includes: The first network element sends a fourth message to a second network element, where the fourth message includes the SUPI, and the fourth message is used to trigger an AKA mechanism.

For example, before the first network element sends the fourth message to the second network element, the method further includes: The first network element determines, based on a preconfigured correspondence between the key identifier and the SUPI, that the SUPI is valid; and when the SUPI is valid, the first network element sends the fourth message to the second network element. In this application, the correspondence between the key identifier and the SUPI is preconfigured, and when the SUPI is valid, the fourth message is sent to trigger the AKA mechanism. Because the SUPI is valid, a master key corresponding to the SUPI in the AKA mechanism is also valid, so that accuracy of the AKA mechanism can be improved.

With reference to the fourth aspect, in a possible implementation, after the second network element receives the fourth message, the second network element may generate an authentication vector based on a master key corresponding to the SUPI, and perform the authentication and key agreement AKA mechanism.

According to a fifth aspect, this application provides a communication method. The method includes: A second network element receives a fourth message from a first network element, where the fourth message includes an SUPI, and the fourth message is used to trigger an AKA mechanism; and the second network element generates an authentication vector based on a master key corresponding to the SUPI, and performs the authentication and key agreement AKA mechanism. It may be understood that, in the AKA mechanism, the SUPI corresponds to one master key, and a cipher key (cipher key, CK) and an integrity key (integrity key, IK) may be derived based on the master key for subsequent communication assurance.

According to a sixth aspect, this application provides a communication apparatus. The communication apparatus may be a terminal device, a first network element, a second network element, or a chip therein. The communication apparatus includes a unit and/or a module configured to perform the method provided in any one of the first aspect to the fifth aspect or any possible implementation of any one of the first aspect to the fifth aspect, for example, a transceiver unit and/or a processing unit. The transceiver unit is configured to send and receive various information or signaling. Therefore, beneficial effects (or advantages) of the method provided in any one of the first aspect to the fifth aspect can also be achieved.

According to a seventh aspect, this application provides a communication apparatus. The communication apparatus includes a processor, configured to perform the method provided in any one of the first aspect to the fifth aspect or any possible implementation of any one of the first aspect to the fifth aspect. Alternatively, the processor is configured to execute a program stored in a memory, and when the program is executed, the method provided in any one of the first aspect to the fifth aspect or any possible implementation of any one of the first aspect to the fifth aspect is performed.

With reference to the seventh aspect, in a possible implementation, the memory is located outside the communication apparatus.

With reference to the seventh aspect, in a possible implementation, the memory is located inside the communication apparatus.

In this application, the processor and the memory may alternatively be integrated into one component, that is, the processor and the memory may alternatively be integrated together.

With reference to the seventh aspect, in a possible implementation, the communication apparatus further includes a transceiver, and the transceiver is configured to send or receive various messages.

According to an eighth aspect, this application provides a readable storage medium. The readable storage medium stores program instructions, and when the program instructions are run on a communication apparatus, the communication apparatus is enabled to perform the communication method provided in any one of the first aspect to the fifth aspect or any possible implementation of any one of the first aspect to the fifth aspect.

According to a ninth aspect, this application provides a program product including instructions. When the instructions are run, the model authorization method described in any one of the first aspect to the fifth aspect or any possible implementation of any one of the first aspect to the fifth aspect.

According to a tenth aspect, this application provides a communication apparatus. The communication apparatus may be implemented in a form of a chip, or may be implemented in a form of a device. The apparatus includes a processor. The processor is configured to read a program stored in a memory and execute the program, to perform the communication method provided in any one of the first aspect to the fifth aspect or any possible implementation of any one of the first aspect to the fifth aspect. Optionally, the apparatus further includes a memory, and the memory is connected to the processor by using a circuit. Further, optionally, the apparatus further includes a communication interface, and the processor is connected to the communication interface. The communication interface is configured to receive information and/or signaling that need/needs to be processed. The processor obtains the information and/or signaling from the communication interface, processes the information and/or signaling, and outputs a processing result through the communication interface. The communication interface may be an input/output interface.

Optionally, the processor and the memory may be physically independent units, or the memory may be integrated with the processor.

According to an eleventh aspect, this application provides a communication system. The communication system includes a terminal device and a first network element or a second network element. The terminal device is configured to perform the method described in any one of the first aspect or the possible implementations of the first aspect. The first network element is configured to perform the method described in any one of the second aspect and the fourth aspect, or the possible implementations of any one of the second aspect and the fourth aspect. The second network element is configured to perform the method described in any one of the third aspect and the fifth aspect, or the possible implementations of any one of the third aspect and the fifth aspect.

For technical effects achieved in the foregoing aspects, refer to the foregoing aspects, or refer to beneficial effects in the following method embodiments. Details are not described herein.

### BRIEF DESCRIPTION OF DRAWINGS

FIG. 1 is a diagram of a 5G network architecture defined in 3GPP TS 23.501;
FIG. 2 is a simplified schematic flowchart of identity authentication of UE according to an embodiment of this application;
FIG. 3 is a schematic flowchart of a communication method according to an embodiment of this application;
FIG. 4 is a diagram of a manner of generating an SUCI according to an embodiment of this application;
FIG. 5 is a schematic flowchart of a key configuration method according to an embodiment of this application;
FIG. 6A and FIG. 6B are another schematic flowchart of a communication method according to an embodiment of this application;
FIG. 7 is a diagram of a structure of a communication apparatus according to an embodiment of this application;
FIG. 8 is a diagram of another structure of a communication apparatus according to an embodiment of this application; and
FIG. 9 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

In descriptions of this application, the terms such as "first" and "second" are merely used to distinguish between different objects, and do not limit a quantity and an execution sequence. In addition, the terms such as "first" and "second" do not indicate a definite difference. In addition, the terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

In this application, the term "example" or "for example" is used to represent giving an example, an illustration, or a description. Any embodiment or design scheme described as "example", "such as", or "for example" in this application should not be explained as being more preferred or having more advantages than another embodiment or design scheme. Exactly, use of the term such as "example", "such as", or "for example" is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, unless otherwise specified, an element indicated in a singular form is intended to indicate "one or more", but does not indicate "one and only one".

In addition, the terms "system" and "network" may be used interchangeably in this specification.

It may be understood that, in embodiments of this application, similar expressions such as "A corresponds to B" and "A corresponds to/associates with B" indicate that there is a correspondence between A and B, and B may be determined based on A. It should be further understood that determining/generating B based on A does not mean that B is determined based only on A. B may alternatively be determined based on A and/or other information.

The following briefly describes a network architecture of this application. It should be understood that the network architecture described in this application is intended to describe the technical solutions in embodiments of this application more clearly, and does not constitute a limitation on the technical solutions provided in embodiments of this application.

The technical solutions provided in this application may be applied to a wireless communication system, where the wireless communication system includes but is not limited to a triple architecture of a network side (for example, a core network), an access network device, and a terminal device (for example, an IoT device), for example, a 5th generation (5th generation, 5G) communication system or new radio (new radio, NR), a long term evolution (long term evolution, LTE) network, a MulteFire network (a new wireless network is created by using an LTE technology that independently runs on an unlicensed spectrum (for example, a global 5 GHz unlicensed spectrum), a home base station network, a mobile network accessed through wireless fidelity (wireless fidelity, Wi-Fi), a wideband code division multiple access (wideband code division multiple access, WCDMA) network, a fixed-mobile convergence network (a fixed access network accessing a mobile network), and another future communication system such as a sixth generation mobile communication system.

For example, the technical solutions provided in this application may be applied to a 5G network architecture defined in the 3rd generation partnership project technical specification (3rd generation partnership project technical specification, 3GPP TS) 23.501.

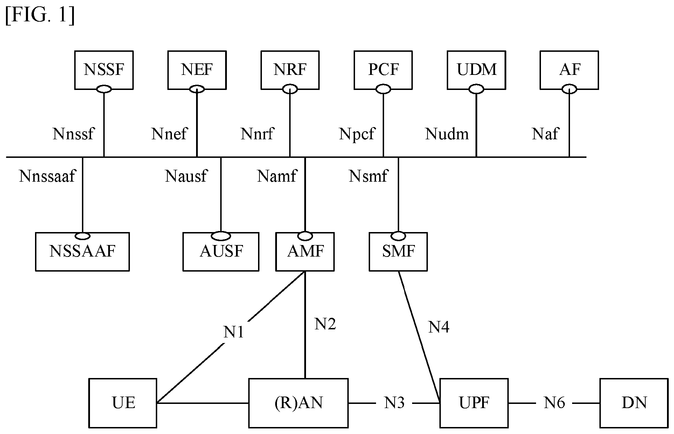

FIG. 1 is a diagram of a 5G network architecture defined in 3GPP TS 23.501. As shown in FIG. 1, the 5G network architecture may include two parts: an access network and a core network. The access network is configured to implement a function related to radio access, and may include a radio access network (radio access network, RAN) and user equipment (user equipment, UE). The core network may include but is not limited to the following logical functions: a network slice selection function (network slice selection function, NSSF), a network exposure function (network exposure function, NEF), a network repository function (network repository function, NRF), a policy control function (policy control function, PCF), a unified data management (unified data management, UDM) function, an application function (application function, AF), a network slice specific authentication and authorization function (network slice specific authentication and authorization function, NSSAAF), an authentication server function (authentication server function, AUSF), an access and mobility management function (access and mobility management function, AMF), a session management function (session management function, SMF), a user plane function (user plane function, UPF), and the like. It may be understood that "Nnssf", "Nnef", "Nnrf", "Npcf", "Nudm", "Naf", "Nnssaaf", "Nausf", "Namf", and "Nsmf" in FIG. 1 represent names of service-based interfaces. For details, refer to related descriptions in the 3GPP standard protocol. Details are not described herein.

In a possible implementation, the UE may access a data network (data network, DN) by establishing a session, that is, a protocol data unit (protocol data unit, PDU) session (PDU session), between the UE and the RAN, and then the UPF and then the data network.

The UE may be a terminal device, for example, a mobile phone, an IoT terminal device, an intelligent terminal, a vehicle-mounted terminal, a vehicle-mounted device, a wearable device, a multimedia device, or a streaming media device. For example, the IoT terminal device (or an IoT device for short) includes but is not limited to a smart tag, a passive tag, an active tag, a radio frequency identification (radio frequency identification, RFID) device, a personal wearable device, a car, a skateboard, an industrial control element, a smart home device, a child-mother handheld phone, and an ambient IoT device (Ambient IoT, A-IoT). In a possible implementation, the IoT device in this application may be a low-power device or a low-computing-power device, or a device with limited or no energy storage capacity.

The RAN may be configured to provide wireless access for the terminal device, including but not limited to a 5G-next generation NodeB (Next-Generation NodeB, gNB), an evolved NodeB (evolved NodeB, eNodeB or eNB) in an LTE network, a wireless fidelity access point (wireless fidelity access point, Wi-Fi AP), a worldwide interoperability for microwave access base station (worldwide interoperability for microwave access base station, WiMAX BS), a relay station, and the like. In a 5G RAN architecture, the gNB may include a central unit (central unit, CU) and a distributed unit (distributed unit, DU). The gNB may further include a radio unit (radio unit, RU). The CU and the DU may be understood as division of the base station from a perspective of logical functions. The CU and the DU may be physically separated or may be deployed together. For example, a plurality of DUs may share one CU, or one DU may be connected to a plurality of CUs, and the CU and the DU may be connected through an F1 interface.

The AMF is mainly responsible for mobility management in a mobile network, such as user location update, registration of a user with a network, and user switching. The SMF is mainly responsible for session management in the mobile network, such as session establishment, modification, and release. A specific function is, for example, allocating an internet protocol (internet protocol, IP) address to the user, or selecting the UPF that provides a packet forwarding function. The PCF is responsible for providing policies such as a quality of service (quality of service, QoS) policy and a slice selection policy for the AMF and the SMF. The UDM may be configured to store user data such as subscription information and authentication or authorization information. The NSSAAF is mainly responsible for authentication and authorization of a network slice, and may interact with an authentication, authorization, and accounting server (authentication, authorization, and accounting server, AAA-S) by using an authentication, authorization, and accounting proxy (authentication, authorization, and accounting proxy, AAA-P). The AF may be responsible for providing a service for a 3GPP network, for example, affecting service routing or interacting with the PCF to perform policy control. The UPF is mainly responsible for performing processing such as forwarding and charging on a user packet. The DN may be a carrier network that provides a data transmission service for the user, such as an IP multimedia service (IP Multi-media Service, IMS) or the internet.

It may be understood that, for each network function shown in FIG. 1, refer to a related protocol, standard, or the like. Details are not described in this application. It should be further understood that N1, N2, N3, N4, N6, and the like shown in FIG. 1 are all interface serial numbers. For example, for meanings of the interface serial numbers, refer to meanings defined in the 3GPP standard protocol. The meanings of the interface serial numbers are not limited in this application.

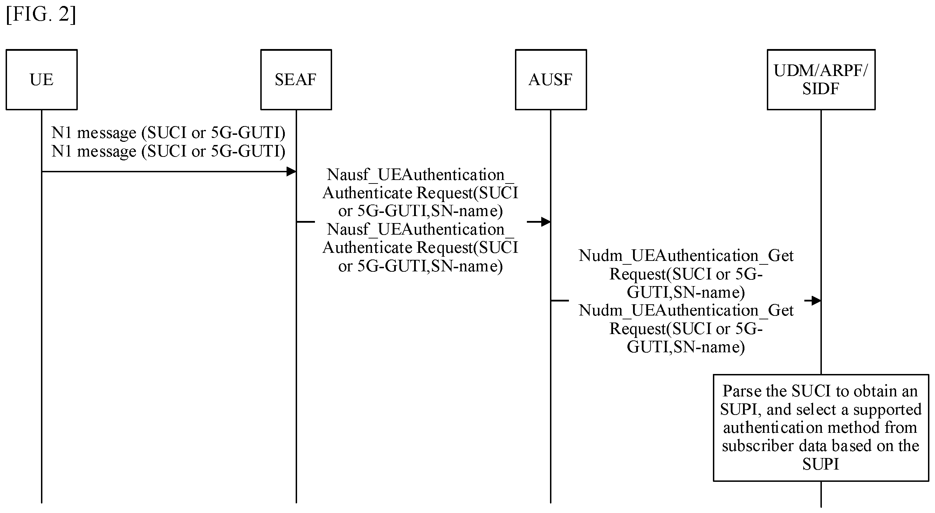

When UE in an existing cellular communication system (for example, 5G) performs access for the first time, identity authentication of the UE is first performed, and then an AKA process of the UE is performed, for example, a fifth generation authentication and key agreement (5G authentication and key agreement, 5G-AKA) process or an extensible authentication protocol (extensible authentication protocol, EAP) AKA 'process. This application mainly focuses on the identity authentication of the UE. FIG. 2 is a simplified schematic flowchart of identity authentication of UE according to an embodiment of this application. According to a policy of a security anchor function (security anchor function, SEAF), the SEAF may initiate authentication with the UE in any process for establishing a signaling connection with the UE. As shown in FIG. 2, the UE uses a subscription concealed identifier (subscription concealed identifier, SUCI) or a 5G globally unique temporary identifier (5G globally unique temporary identifier, 5G-GUTI) in a registration request (for example, carried in an N1 message). When the SEAF is ready to start the authentication with the UE, the SEAF invokes an Nausf_UEAuthentication service by sending an Nausf_UEAuthentication_Authenticate request message to an authentication server function (authentication server function, AUSF). The request message may include the SUCI or 5G-GUTI and a service network name (service network name, SN-name). If the SEAF has the valid 5G-GUTI and re-authenticates the UE, the SEAF needs to include a subscription permanent identifier (subscription permanent identifier, SUPI) in the Nausf_UEAuthentication_Authenticate Request message, or otherwise, includes the SUCI.

When receiving the Nausf_UEAuthentication_Authenticate Request message, the AUSF compares the service network name with an expected service network name to check whether the SEAF is authorized to use the received service network name. The AUSF temporarily stores the received service network name. If a serving network is not authorized to use the service network name, the AUSF includes"unauthorized serving network" information in Nausf_UEAuthentication_Authenticate Response. The AUSF sends an Nudm_UEAuthentication_Get request to a UDM. The request includes the following information: the SUCI or SUPI and the service network name. When the UDM receives the Nudm_UEAuthentication_Get request that includes the SUCI, the UDM invokes a subscription identifier de-concealing function (subscription identifier De-concealing function, SIDF). Before the UDM processes the request, the SIDF parses the SUCI to obtain the SUPI. The SIDF may decrypt the SUCI to obtain a long-term identity, that is, the SUPI, such as an international mobile subscriber identity (international mobile subscriber identity, IMSI). The UDM/authentication credential repository and processing function (authentication credential repository and processing function, ARPF) selects an authentication method, for example, 5G-AKA, supported in subscriber data based on the SUPI.

In a possible implementation, a method for constructing the SUCI may be: sequentially concatenating an SUPI type (SUPI Type) field, a home network identifier (Home Network Identifier) field, a routing indicator (Routing Indicator) field, a protection scheme identifier (Protection Scheme ID) field, a home network public key identifier (Home Network Public Key ID) field, and a scheme output (Scheme output) field, to obtain the SUCI. The SUPI type field indicates a type of the SUPI and has a value from 0 to 7. The home network identifier field indicates an identifier of a home network. The routing indicator is recorded in a universal subscriber identity module (universal subscriber identity module, USIM). The protection scheme ID field indicates a protection algorithm ID of the SUPI. The home network public key ID field indicates a home network key (which is a public key herein) and has a value from 0 to 255. The scheme output field indicates an SUPI ciphertext. The SUPI ciphertext is obtained by encrypting the SUPI by using the public key of the home network.

It can be learned from the foregoing UE identity authentication process and the foregoing SUCI construction method that the SUPI is encrypted by using a public key on a network side. In this way, the UDM can decrypt the SUCI by using a unified private key on the network side, to obtain the SUPI. However, in an existing UE identity authentication process, a public key encryption algorithm (for example, an elliptic curve integrated encryption scheme (elliptic curve integrated encryption scheme, ECIES)) is used to encrypt an SUPI, and a public key needs to be dynamically generated. A manner of generating the public key is complex and energy-intensive, and encrypting the SUPI by using the public key is complex and energy-intensive. For a low-power or low-computing-power device, its energy consumption cannot support generation of a public key and public key-based encryption. Therefore, it is not feasible to protect the low-power or low-computing-power device by using an existing security protection mechanism.

Based on this, this application provides a communication method, a communication apparatus, and a readable storage medium, to protect a permanent identifier in a symmetric encryption manner. It meets power consumption requirements of a low-power or low-computing-power device (for example, an IoT device) while improving device security.

In a possible implementation, the low-power or low-computing-power device in this application may include but is not limited to the IoT device.

The following describes in detail the technical solutions provided in this application with reference to more accompanying drawings.

The technical solutions provided in this application are described by using a plurality of embodiments. For details, refer to descriptions of the following embodiments. Mutual reference may be made between same or similar parts in embodiments or implementations. In embodiments of this application and the implementations/implementation methods/feasible methods in embodiments, unless otherwise specified or a logical conflict occurs, terms and/or descriptions are consistent and may be mutually referenced between different embodiments and between the implementations/implementation methods/feasible methods in embodiments. Technical features in the different embodiments and the implementations/implementation methods/feasible methods in embodiments may be combined to form a new embodiment, implementation, implementation method, or feasible method based on an internal logical relationship thereof. The following implementations of this application are not intended to limit the protection scope of this application.

In a possible implementation, a terminal device in this application may be an IoT device, for example, an ambient IoT (A-IoT) device, a passive IoT (Passive IoT, P-IoT) device, a smart tag, a passive tag, an active tag, or an industrial control element. The IoT device in this application may have low power consumption, low computing power, or limited energy storage capacity. A first network element in this application may be an AMF or a tag management function (tag management function, TMF). The tag management function (TMF) may be understood as a network element that performs management (for example, registration and authentication) on a tag, and may be deployed in a toB (to business) park. It should be understood that the TMF may be an independently disposed network element, or may be disposed together with another network element (for example, an AMF network element). A second network element in this application may be an ARPF or a UDM.

In a possible implementation, this application further relates to a key storage network element, which may be configured to store and retrieve a key or key-related information. The key storage network element may be an independently disposed network element, or may be disposed together with the AMF/TMF, or may be disposed together with an AF, depending on whether the key is managed by a third party or an operator. If the key is managed by the operator, the key storage network element may be disposed on the UDM, or may be disposed together with the AMF/TMF. If the key is managed by the third party, the key storage network element may be disposed together with the AF.

In embodiments of this application, "a network element A sends information A to a network element B" may be understood as that a destination end of the information A is the network element B, a source end of the information A is the network element A, and forwarding by an intermediate network element may exist in a transmission path from the source end to the destination end of the information A. Only the source end and the destination end of the information A are shown in embodiments of this application. It may be understood that necessary processing, for example, a format change, may be performed on the information between the source end and the destination end between which the information is sent, but the destination end can understand valid information from the source end. Similar descriptions in this application may be understood similarly, and details are not described herein.

The following separately describes embodiments in detail.

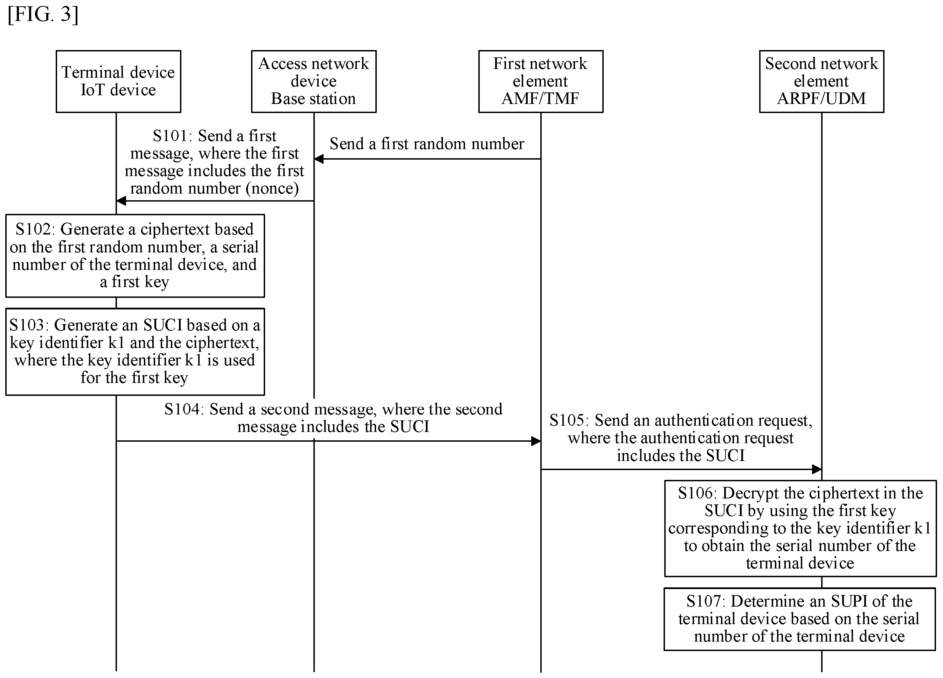

FIG. 3 is a schematic flowchart of a communication method according to an embodiment of this application. In this method, a terminal device encrypts a serial number (Serial Number) of the terminal device by using a symmetric key, and an ARPF/UDM of a home network decrypts the serial number by using the symmetric key and determines an SUPI based on decrypted information. It may be understood that symmetric key encryption is also referred to as dedicated key encryption or shared key encryption. That is, a key used by a data sender to encrypt plaintext is the same as a key used by a data receiver to decrypt a corresponding ciphertext.

As shown in FIG. 3, the communication method includes but is not limited to the following steps.

S101: An access network device (for example, a base station) sends a first message to a terminal device (for example, an IoT device), where the first message includes a first random number (nonce).

Correspondingly, the terminal device (for example, the IoT device) receives the first message.

In a possible implementation, the first random number (nonce) may be generated by a first network element (for example, an AMF/TMF). Therefore, the first random number (nonce) may be sent by the first network element to the access network device (for example, the base station), and then sent by the access network device (for example, the base station) to the terminal device (for example, the IoT device). For example, the first message that carries the first random number may be a non-access stratum (Non-access stratum, NAS) message. For example, the first network element may send the NAS message to the terminal device through the access network device, where the NAS message may include the first random number. Herein, the access network device forwards the NAS message sent by the first network element. It may be understood that the access network device may perform transparent forwarding, or may perform forwarding after processing on all or some content in the NAS message. This is not limited in this embodiment of this application.

For another example, the first message may be a downlink message in an access procedure, for example, a random access response (random access response) or a radio resource control (radio resource control, RRC) connection setup (RC connection setup) message. For example, the first network element may send an N2 message (N2 message) to the access network device, where the N2 message includes the first random number. After receiving the N2 message, the access network device may send a selection (select) message to the terminal device, where the selection message may be used to trigger an access procedure of the terminal device (for example, the IoT device). In a possible implementation, the selection message may include the first random number. For example, the selection message may be a beam that enables the terminal device to obtain energy, so that the terminal device can obtain the energy to perform a subsequent access procedure. For another example, the selection message may be a system information broadcast (system information broadcast, SIB) message, and may be used by the access network device (for example, the base station) to select a terminal device to perform a subsequent access procedure via broadcast. In another possible implementation, the selection message does not include the first random number, and the access network device may send the first random number to the terminal device in a subsequent access procedure. For example, the first random number is carried in the random access response (random access response) or the radio resource control (radio resource control, RRC) connection setup (RC connection setup) message in the access procedure. Alternatively, the access network device may send the first random number to the terminal device in an RRC setup process.

In a possible implementation, before step S101, the communication method further includes: An application function (AF) sends a service request (service request) to the first network element (for example, the AMF/TMF), where the service request includes a service indication or terminal device identification information. For example, the AF may send the service request to the first network element through an NEF. The service indication or the terminal device identification information may be used to determine one or more terminal devices. After receiving the service request, the first network element (for example, the AMF/TMF) may determine the one or more terminal devices based on the service request. For example, the service request may be used to request some terminal devices to perform some operations. For example, the service request is used to request terminal devices whose terminal device identifiers are in a specific range to perform operations such as inventory or temperature measurement. Therefore, after receiving the service request, the first network element may determine the corresponding terminal device based on the service request. Further, the first network element may generate the first random number (nonce), and may send the first random number to one or more access network devices associated with the one or more terminal devices, so that the terminal device generate a ciphertext based on the first random number to perform authentication. Herein, the "access network device associated with the terminal device" may be understood as an access network device configured to serve the terminal device, an access network device that establishes a connection to the terminal device, or an access network device whose coverage includes the terminal device. For example, the first network element further stores the first random number, to subsequently verify validity of the first random number. For clarity, in this embodiment of this application, one terminal device is used as an example for description.

For example, the terminal device identification information may be a terminal device identification range, for example, an IoT ID range, and may indicate all terminal devices in one terminal ID number range. It may be understood that the terminal device identification range may include an identifier of one or more terminal devices.

For example, the service indication may correspond to the identifier of the one or more terminal devices. For example, a correspondence between the service indication and the identifier of the terminal device may be preconfigured, as shown in Table 1. It may be understood that Table 1 is merely an example, and the correspondence between the service indication and the identifier of the terminal device is not specifically limited in this embodiment of this application. After receiving the service request including the service indication, the first network element may determine the terminal device identification range based on the service indication and the preconfigured correspondence, to determine the one or more terminal devices.

**Table 1**

| Serial number | Service indication | Terminal device identification range (for example, IoT ID number) |
|---|---|---|
| 1 | Determine inventory of all IoT devices in warehouse 1 | 100000 ~ 20000 |
| 2 | Determine temperature measurement of all IoT devices in enterprise A | ab38274c2a1 ~ ab38fffffff |
| 3 | 1 (the service indication may be a number, representing a service) | 119.112.19.1 ~ 119.255.255.255 |
| ... | ... | ... |

S102: The terminal device (for example, the IoT device) generates a ciphertext based on the first random number, a serial number of the terminal device, and a first key.

For example, the serial number of the terminal device may be a serial number of the terminal device, or may be a serial number of a subscriber identity module (subscriber identity module, SIM) card in the terminal device, for example, a mobile subscriber identification number (mobile subscriber identification number, MSIN). This is not limited in this embodiment of this application.

S103: The terminal device (for example, the IoT device) generates an SUCI based on a key identifier k1 and the ciphertext, where the key identifier k1 is used to index the first key.

The first key may be preconfigured in the terminal device (for example, the IoT device).

In a possible implementation, after receiving the first message, the terminal device (for example, the IoT device) may generate the ciphertext (cipher) based on the first random number (nonce) in the first message, the serial number (serial number) of the terminal device, and the first key. For example, the terminal device may use the first random number (nonce) and/or the first key (which may be indexed by using the key identifier) as input, and execute a preconfigured first key generation algorithm to generate a temporary key. It may be understood that there are many key generation algorithms, for example, a key derivation function (key derivation function, KDF) and a hash algorithm. A specifically used key generation algorithm is not limited in this embodiment of this application. Further, the terminal device may encrypt the serial number of the terminal device by using the temporary key, to obtain the ciphertext (cipher). For another example, the terminal device may encrypt, by using the first key (which may be indexed by using the key identifier), a concatenation of the serial number of the terminal device and the first random number (nonce) to obtain the ciphertext (cipher).

There are many encryption methods, for example, an advanced encryption standard (advanced encryption standard, AES), a Robin Montgomery algorithm (Robin Montgomery algorithm, ROMAN), ZUC-128, and AES-128.

In a possible implementation, the terminal device may further generate the ciphertext based on a second random number (RAND). For example, the terminal device may encrypt, by using the temporary key, a concatenation of the serial number of the terminal device and the second random number (RAND) to obtain the ciphertext (cipher). Alternatively, the terminal device may encrypt, by using the first key (which may be indexed by using the key identifier), a concatenation of the serial number of the terminal device, the first random number (nonce), and the second random number (RAND) to obtain the ciphertext (cipher). The second random number (RAND) may be generated by the terminal device. It may be understood that random numbers may be classified into pseudo random numbers and true random numbers. In this embodiment of this application, the first random number (nonce) may be a true random number, and the second random number (RAND) may be a pseudo random number.

In this embodiment of this application, the first key may be the same for a plurality of terminal devices (for example, a plurality of IoT devices), and may be understood as a group key (Group key). Correspondingly, the key identifier used to index the first key may also be the same for the plurality of terminal devices (for example, the plurality of IoT devices). In other words, in this embodiment of this application, the plurality of terminal devices may use a same key to generate a ciphertext (cipher). In addition, a symmetric key is used in this embodiment of this application, that is, the same key is used for decryption and encryption. Therefore, directly encrypting the serial number of the terminal device would make it vulnerable to attackers, as the plurality of terminal devices all possess the first key.

Therefore, in this embodiment of this application, to improve security, the first random number (nonce) is introduced to the ciphertext (cipher) generation process. This increases the freshness of the ciphertext or the key, making it impossible for an attacker to decrypt the ciphertext (cipher) to obtain the serial number of the terminal device even if the attacker has the symmetric key (for example, the first key), thereby reducing replay attacks on a network side (for example, the second network element). It may be understood that a replay attack (replay attack), also referred to as a playback attack or a repeat attack, indicates that an attacker sends a packet that has been received by a destination host to deceive a system, and is mainly used to undermine authentication correctness in the authentication process.

In addition, in this embodiment of this application, the second random number (RAND) is also introduced to the ciphertext (cipher) generation process to increase the randomness of the ciphertext (cipher), thereby further improving security.

In a possible implementation, after obtaining the ciphertext (cipher), the terminal device may generate a SUCI based on the key identifier and the ciphertext (cipher). For example, the SUCI may be obtained by concatenating the key identifier and the ciphertext (cipher), for example, SUCI = {key identifier || cipher}, where the symbol "||" represents concatenation. Details are not described below. Alternatively, the SUCI may be obtained by concatenating the key identifier, the ciphertext (cipher), and another parameter. For details, refer to the following descriptions. The key identifier may be used by (the terminal device and the second network element) to index the first key. For ease of distinction, the key identifier used to index the first key is denoted as the key identifier k1 below.

In a possible implementation, the terminal device may further generate the SUCI based on one or more of the following: a type of SUPI, a home network identifier of the terminal device, a routing indicator (Routing Indicator), the first random number (nonce), or a message authentication code (message authentication code, MAC). It may be understood that the type of SUPI may be indicated by an SUPI type field, which may indicate an encryption and arrangement scheme for the SUPI. In this embodiment of this application, the type of SUPI may be a new type, different from any existing SUPI type. For example, a value of the SUPI type field in this embodiment of this application may be a reserved value of an existing SUPI type field, which may indicate an SUPI of an IoT terminal device or an SUPI of a low-power device/low-computing-power device. The home network identifier of the terminal device may be an identifier of a network to which the terminal device belongs, for example, a public land mobile network identifier (public land mobile network ID, PLMN ID), and may be indicated by a home network identifier field. In this embodiment of this application, the home network identifier of the terminal device may be used to determine the second network element (for example, the ARPF/UDM). The routing indicator is recorded in a USIM of the terminal device. The MAC (message authentication code) may be used to provide integrity protection (or integrity check).

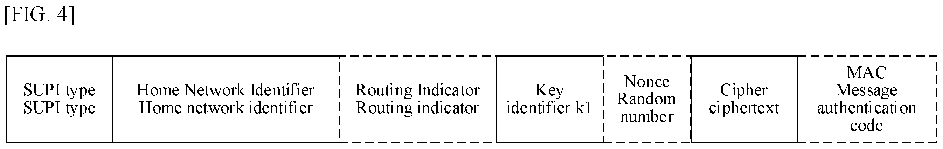

For example, FIG. 4 is a diagram of a manner of generating an SUCI according to an embodiment of this application. As shown in FIG. 4, the SUCI may be obtained by sequentially concatenating the type of the SUPI (for example, an SUPI type), the home network identifier (Home Network Identifier) of the terminal device, the key identifier k1, and the ciphertext (cipher), for example, SUCI = { SUPI Type || Home Network Identifier || key identifier k1 || cipher}. Alternatively, the SUCI may be obtained by sequentially concatenating the type of the SUPI, the home network identifier of the terminal device, the routing indicator, the key identifier k1, and the ciphertext, for example, SUCI = { SUPI type || Home Network Identifier || Routing Indicator || key identifier k1 || cipher || MAC}. Alternatively, the SUCI may be obtained by sequentially concatenating the type of the SUPI, the home network identifier of the terminal device, the key identifier k1, the ciphertext, and the MAC, for example, SUCI = { SUPI type || Home Network Identifier || key identifier k1 || cipher || MAC}. Alternatively, the SUCI may be obtained by sequentially concatenating the type of the SUPI, the home network identifier of the terminal device, the key identifier k1, the first random number, the ciphertext, and the MAC, for example, SUCI = { SUPI type || Home Network Identifier || key identifier k1 || nonce || cipher || MAC}. Due to limited space, possible SUCI construction/generation manners are not listed one by one herein. The symbol "||" represents a "concatenation" operation. Details are not described below. In a possible implementation, the first random number (nonce) may be carried in a home network public key identifier (Home Network Public Key ID) field of the SUCI.

In a possible implementation, one key identifier in this embodiment of this application may be used to index one or more preconfigured keys. It may be understood that, if one key identifier may be used to index a plurality of preconfigured keys, in a subsequent decryption process of the second network element (for example, the ARPF/UDM), the plurality of keys indexed by using the key identifier may be used to separately decrypt the ciphertext (cipher). In other words, the second network element may successfully decrypt the ciphertext after a plurality of attempts.

In a possible implementation, before step S102, the home network identifier of the terminal device and at least one key identifier may be preconfigured. The at least one key identifier includes the key identifier k1 (used to index the first key). For example, the home network identifier of the terminal device and the at least one key identifier may be preset in the terminal device by a vendor, a manufacturer, a seller, or an operator of the terminal device. Before performing step S102, the terminal device may first determine the key identifier k1 from the at least one preset key identifier, and then determine the first key based on the key identifier k1. For example, one or more keys (including the first key) corresponding to (or indexed by using) the key identifier k1 may be predefined in a standard protocol. For another example, one or more keys (including the first key) corresponding to (or indexed by using) the key identifier k1 may be preset in the terminal device. This is not limited in this embodiment of this application.

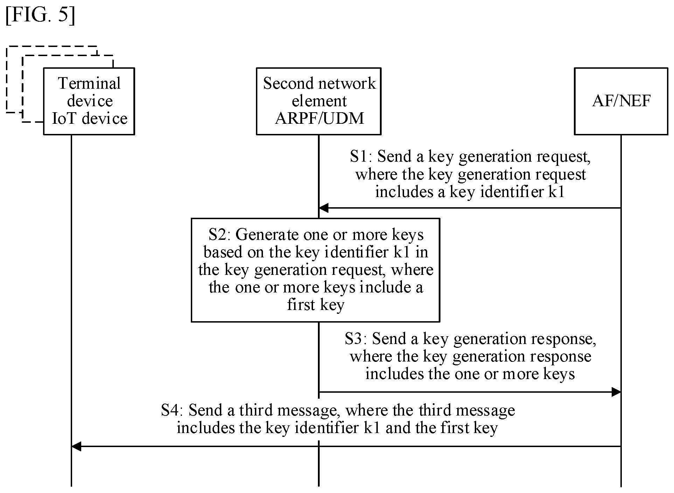

In another possible implementation, the home network identifier of the terminal device may be preset in the terminal device by a vendor, a manufacturer, a seller, or an operator of the terminal device. The key identifier k1 and the first key may be preconfigured by the AF/NEF for one or more terminal devices (for example, IoT devices). For example, FIG. 5 is a schematic flowchart of a key configuration method according to an embodiment of this application. As shown in FIG. 5, the key configuration method includes but is not limited to step S1 to step S4.

S1: The AF/NEF sends a key generation request to the second network element (for example, the ARPF/UDM), where the key generation request includes the key identifier k1.

In a possible implementation, the key generation request further includes one or more home network identifiers. The one or more home network identifiers may be used to generate one or more keys with reference to the key identifier k1.

S2: The second network element (for example, the ARPF/UDM) generates the one or more keys based on the key identifier k1 in the key generation request, where the one or more keys include the first key.

In a possible implementation, after obtaining the one or more keys (including the first key), the second network element (for example, the ARPF/UDM) may correspondingly store the key identifier k1 and the one or more keys. In other words, the second network element establishes an association between the one or more keys (including the first key) and the key identifier k1, so that the first key is subsequently indexed based on the key identifier k1.

In a possible implementation, if the key generation request includes the one or more home network identifiers, the second network element (for example, the ARPF/UDM) may generate the one or more keys (including the first key) based on the key identifier k1 and the one or more home network identifiers. Correspondingly, the second network element (for example, the ARPF/UDM) obtains the one or more keys, and may correspondingly store the key identifier k1, the one or more home network identifiers, and the one or more keys. In other words, the second network element establishes an association between the one or more keys (including the first key), the key identifier k1, and the one or more home network identifiers, so that the first key is subsequently indexed based on the key identifier k1 and/or the home network identifier.

S3: The second network element (for example, the ARPF/UDM) sends a key generation response to the AF/NEF, where the key generation response includes the one or more keys. For example, the AF/NEF receives and stores the one or more keys. The AF/NEF may further record a correspondence between at least two of the following: the key identifier k1, the one or more keys, and the one or more home network identifiers.

S4: The AF/NEF sends a third message to the one or more terminal devices (for example, IoT devices), where the third message includes the key identifier k1 and the first key.

In a possible implementation, the third message includes the key identifier k1 and the one or more keys, and the one or more keys include the first key. One terminal device is used as an example. After receiving the one or more keys, the terminal device may select one of the keys (denoted as the first key) for encryption. It may be understood that the key configuration method shown in FIG. 5 may be performed before step S102. For example, the key configuration method shown in FIG. 5 may be performed before step S101, or during device initialization, or during device production. This is not limited in this embodiment of this application.

S104: The terminal device (for example, the IoT device) sends a second message to the first network element (for example, the AMF/TMF), where the second message includes the SUCI. The SUCI may be used for identity protection of the terminal device (for example, the IoT device).

Correspondingly, the first network element (for example, the AMF/TMF) receives the second message.

In a possible implementation, the second message may include the SUCI. For example, the second message further includes the first random number (nonce). In other words, the first random number (nonce) may be explicitly or implicitly carried in the second message. For example, if the SUCI does not carry the first random number (nonce), the first random number (nonce) may be explicitly carried in the second message, for example, the first random number (nonce) is used as an information element in the second message. If the SUCI carries the first random number (nonce), it indicates that the first random number (nonce) is implicitly carried in the second message. Certainly, when the SUCI carries the first random number (nonce), the first random number (nonce) may also be explicitly carried in the second message. This is not limited in this embodiment of this application.

For example, the second message may be a registration request (registration request) or a response message of a service request (service request), for example, a response message sent by the UE in response to a previous service request on the network side. The registration request may be used by the terminal device to perform registration during initial access.

S105: The first network element (for example, the AMF/TMF) sends an authentication request to the second network element (for example, the ARPF/UDM), where the authentication request includes the SUCI. The second network element may be determined based on the home network identifier of the terminal device in the SUCI.

Correspondingly, the second network element (for example, the ARPF/UDM) receives the authentication request.

In a possible implementation, after receiving the second message, the first network element (for example, the AMF/TMF) may split the SUCI in the second message, to obtain the home network identifier of the terminal device. The first network element (for example, the AMF/TMF) may determine the second network element (for example, the ARPF/UDM) based on the home network identifier of the terminal device, and may send the authentication request to the second network element (for example, the ARPF/UDM). For example, the first network element (for example, the AMF/TMF) may send the authentication request to the second network element (for example, the ARPF/UDM) through an AUSF. The authentication request may include the SUCI. It may be understood that the AUSF is located in the home network, and may be determined based on the home network identifier of the terminal device.

In a possible implementation, after receiving the second message, the first network element (for example, the AMF/TMF) may check whether the first random number (nonce) included in the second message is valid. For example, the first network element may split the SUCI in the second message, to obtain the home network identifier of the terminal device. If the first random number (nonce) is implicitly carried in the second message, the first random number (nonce) may be further obtained by splitting the SUCI. If the first random number (nonce) is explicitly carried in the second message, the first random number (nonce) may be directly obtained from the second message. For example, there are many manners in which the first network element checks whether the first random number (nonce) included in the second message is valid. For example, when sending the first random number (nonce), the first network element starts a timer for the first random number. When receiving the second message, the first network element may check whether the timer expires. If the timer expires, it indicates that the first random number (nonce) is invalid. If the timer does not expire, it indicates that the first random number (nonce) is valid. Alternatively, after the timer expires, the first random number (nonce) stored in the first network element is deleted. When receiving the second message, the first network element checks whether the first random number is locally stored. If the first random number is not locally stored in the first network element, it indicates that the first random number is invalid. If the first random number is locally stored in the first network element, it indicates that the first random number is valid. For another example, if the first random number included in the second message is not a random number last sent by the first network element, it indicates that the first random number is invalid. If the first random number included in the second message is a random number last sent by the first network element, it indicates that the first random number is valid. Alternatively, if the first random number included in the second message is not generated by the first network element, it indicates that the first random number is invalid. If the first random number included in the second message is generated by the first network element, it indicates that the first random number is valid.

In a possible implementation, when the first random number included in the second message is valid, the first network element (for example, the AMF/TMF) may determine the second network element (for example, the ARPF/UDM) based on the home network identifier of the terminal device, and may send the authentication request to the second network element (for example, the ARPF/UDM). For example, the first network element (for example, the AMF/TMF) may send the authentication request to the second network element (for example, the ARPF/UDM) through an AUSF. The authentication request may include the SUCI. It may be understood that the AUSF is located in the home network, and may be determined based on the home network identifier of the terminal device. When the first random number included in the second message is invalid, the first network element (for example, the AMF/TMF) may send a response message to the terminal device. The response message may indicate a result indicating that the authentication process of the terminal device fails. For example, the response message may further carry a failure cause value indication, for example, the first random number is invalid or expires.

In a possible implementation, the authentication request further includes one or more of the following: indication information or the first random number (nonce). The indication information may indicate that the SUCI is an identifier of a low-power device, a low-computing-power device, or an IoT device. For example, the first network element may determine, based on a specific field (for example, the SUPI type field) in the SUCI, whether to add the indication information to the authentication request. For example, the SUPI type field in the SUCI indicates that the type of the SUPI is a specific type, and the specific type corresponds to a low-power device, a low-computing-power device, or an IoT device. The first network element may add the indication information to the authentication request. For another example, if the first network element is a special network element such as a TMF, the first network element may add the indication information to the authentication request. The first random number (nonce) may be explicitly or implicitly carried in the authentication request. For example, if the SUCI does not carry the first random number (nonce), the first random number (nonce) may be explicitly carried in the authentication request, for example, the first random number (nonce) is used as an information element in the authentication request. If the SUCI carries the first random number (nonce), it indicates that the first random number (nonce) is implicitly carried in the authentication request. Certainly, when the SUCI carries the first random number (nonce), the first random number (nonce) may also be explicitly carried in the authentication request. This is not limited in this embodiment of this application.

S106: The second network element (for example, the ARPF/UDM) decrypts the ciphertext in the SUCI by using the first key corresponding to the key identifier k1 to obtain the serial number of the terminal device.

S107: The second network element (for example, the ARPF/UDM) determines the SUPI of the terminal device based on the serial number of the terminal device. The SUPI may be used for AKA authentication of the terminal device.

In a possible implementation, after receiving the authentication request, the second network element (for example, the ARPF/UDM) may split the SUCI in the authentication request, to obtain the key identifier k1 and the ciphertext (cipher). The key identifier k1 may be used to index the first key. For example, a correspondence between the key identifier k1 and the first key may be preconfigured in the second network element.

In a possible implementation, the key identifier k1 is used to index only the first key, and the second network element (for example, the ARPF/UDM) may decrypt the ciphertext (cipher) by using the first key to obtain the serial number of the terminal device. In other words, after decrypting the ciphertext (cipher) by using the first key, the second network element retains the serial number of the terminal device, and ignores other content (if any), for example, the first random number (nonce) and/or the second random number (RAND). It may be understood that a manner of decrypting the ciphertext (cipher) by using the first key is an inverse operation of generating the ciphertext (cipher). For example, the second network element may use the first random number (which may be obtained by using the authentication request) and/or the first key as input, and execute a preconfigured second key generation algorithm to generate a temporary key. Then, the second network element decrypts the ciphertext (cipher) by using the temporary key, to obtain the serial number of the terminal device. The second key generation algorithm is the same as the first key generation algorithm, and input of the second key generation algorithm is also the same as the input of the first key generation algorithm. Therefore, the temporary key generated by the terminal device is also the same as the temporary key generated by the second network element.

In another possible implementation, the key identifier k1 may be used to index a plurality of keys, and the plurality of keys include the first key. The second network element (for example, the ARPF/UDM) may separately decrypt the ciphertext (cipher) by using the plurality of keys indexed by using the key identifier k1. A key that successfully decrypts the ciphertext is the first key. In other words, the second network element may make a plurality of decryption attempts, and obtain the serial number of the terminal device when the decryption succeeds.

In a possible implementation, after receiving the authentication request, the second network element (for example, the ARPF/UDM) may first determine a decryption manner (whether symmetric key decryption is used), and then decrypt the ciphertext (cipher) in the SUCI based on the determined decryption manner. For example, if the authentication request carries indication information, and the indication information indicates that the SUCI is an identifier of a low-power device, a low-computing-power device, or an IoT device, the second network element may determine that the decryption manner is symmetric key decryption. Alternatively, the authentication request does not carry indication information, and the second network element may determine the decryption manner based on a specific field (for example, the SUPI type field) in the SUCI. If the SUPI type field in the SUCI indicates that the type of the SUPI is a specific type, and the specific type corresponds to a low-power device, a low-computing-power device, or an IoT device, the second network element may determine that the decryption manner is symmetric key decryption. The symmetric key decryption may be separately decrypting the ciphertext (cipher) in the SUCI by using the one or more keys (including the first key) indexed by using the key identifier k1.

In a possible implementation, if the SUCI in the authentication request carries the MAC (message authentication code), before decrypting the ciphertext (cipher), the second network element may perform integrity check on the SUCI or other content (for example, the type of the SUPI, the home network identifier of the terminal device, the key identifier k1, or the first random number) other than the MAC in the SUCI by using the MAC. When the integrity check succeeds, the ciphertext (cipher) is separately decrypted by using the one or more keys (including the first key) indexed by using the key identifier k1. If the integrity check fails, the second network element (for example, the ARPF/UDM) may send an authentication response to the first network element (for example, the AMF/TMF). The authentication response carries information indicating that the authentication fails, and optionally carries an authentication failure cause (for example, the integrity check fails).

In a possible implementation, after obtaining the serial number of the terminal device, the second network element may recombine and concatenate the serial number (Serial Number) of the terminal device with plaintext in the SUCI, and/or another parameter (which may be content other than the plaintext in the SUCI), to obtain the SUPI of the terminal device. For example, the plaintext in the SUCI may be content other than the ciphertext (and the MAC) in the SUCI. For example, the plaintext in the SUCI includes one or more of the following: the type of the SUPI, the home network identifier of the terminal device, the routing indicator (Routing Indicator), the key identifier k1, or the first random number (nonce). For example, SUPI = { SUPI Type || Home Network Identifier || key identifier k1 || Serial Number }. In this embodiment of this application, a concatenation order of the plaintext content in the SUCI is not limited, and a concatenation order of the plaintext content and the serial number of the terminal device is not limited. For example, the another parameter includes a mobile country code (mobile country code, MCC) and/or a mobile network code (mobile network code, MNC). For example, SUPI = { MCC || MNC || Serial Number }. The serial number may be an MSIN. A concatenation order is not limited in this embodiment of this application.

In a possible implementation, after obtaining the SUPI, the second network element may determine, based on a local policy and/or the indication information in the authentication request, whether to perform an authentication and key agreement (AKA) mechanism. For example, the indication information in the authentication request may further indicate whether to perform the AKA mechanism. Alternatively, the local policy indicates to start/trigger/perform the AKA mechanism under a specific device type. In this case, when determining, based on the SUPI, that a type of the terminal device is the specific device type, the second network element may determine to perform the AKA mechanism. If determining to perform the AKA mechanism, the second network element may generate an authentication vector based on a master key corresponding to the SUPI, and perform the corresponding AKA mechanism. It may be understood that, in the AKA mechanism, the SUPI corresponds to one master key, and a cipher key (cipher key, CK) and an integrity key (integrity key, IK) are derived based on the master key for subsequent communication assurance. For specific implementation of the AKA mechanism, refer to the conventional technology, for example, EAP-AKA' or 5G-AKA. Details are not described in this embodiment of this application. EAP stands for the extensible authentication protocol (extensible authentication protocol).

In a possible implementation, before generating the authentication vector based on the master key corresponding to the SUPI, the second network element may determine whether the SUPI is valid. For example, the second network element may determine, based on a preconfiguration (for example, a preconfigured list of relationships between a key identifier and an SUPI), whether the SUPI of the terminal device is valid. For example, if an SUPI corresponding to the key identifier k1 in the relationship list is the same as the SUPI of the terminal device, it indicates that the SUPI of the terminal device is valid. When the SUPI is valid, the second network element generates the authentication vector based on the master key corresponding to the SUPI, and performs a subsequent operation.

In a possible implementation, the second network element (for example, the ARPF/UDM) may send an authentication response (authentication response) to the first network element (for example, the AMF/TMF), to indicate an identity authentication result of the terminal device. For example, if the second message sent in step S104 is a registration request (Registration request), the first network element (for example, the AMF/TMF) may send a registration response (Registration response) to the terminal device, to indicate a registration result of the terminal device.

In this embodiment of this application, the symmetric key is used for encryption and decryption, and a public key encryption algorithm (for example, an elliptic curve integrated encryption scheme (elliptic curve integrated encryption scheme, ECIES)) and/or a public key generation algorithm are/is not required, so that power consumption of the terminal device can be reduced, and a power consumption requirement of the low-power or low-computing-power device can be met. In this embodiment of this application, the random number (nonce) is further added to the ciphertext, so that freshness of the ciphertext can be increased, and security of the low-power or low-computing-power device can be improved. This application enables the protection of a permanent identifier of the low-power or low-computing-power device while meeting its power consumption requirements, thereby improving device security.

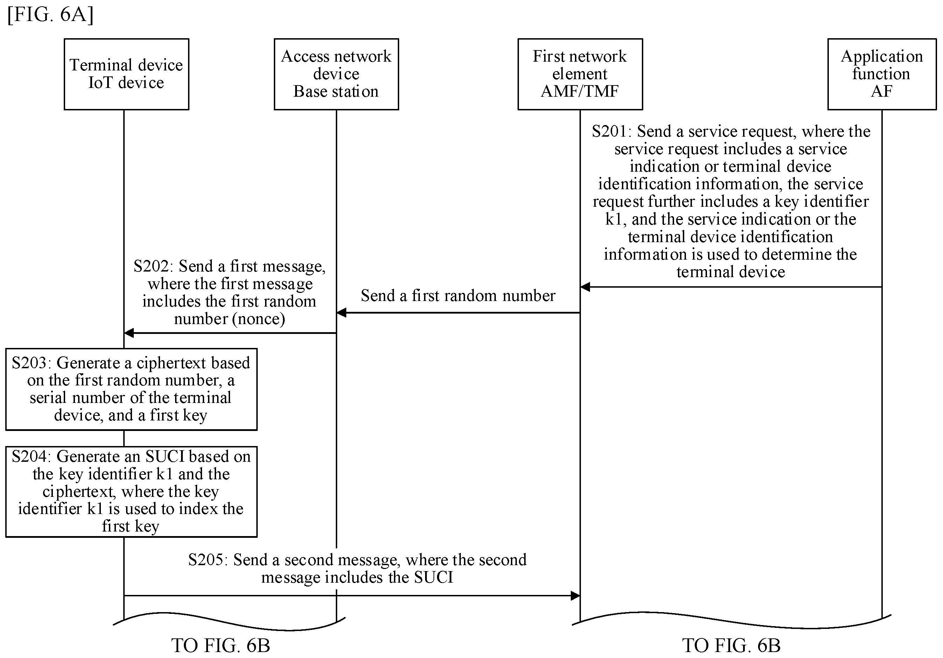

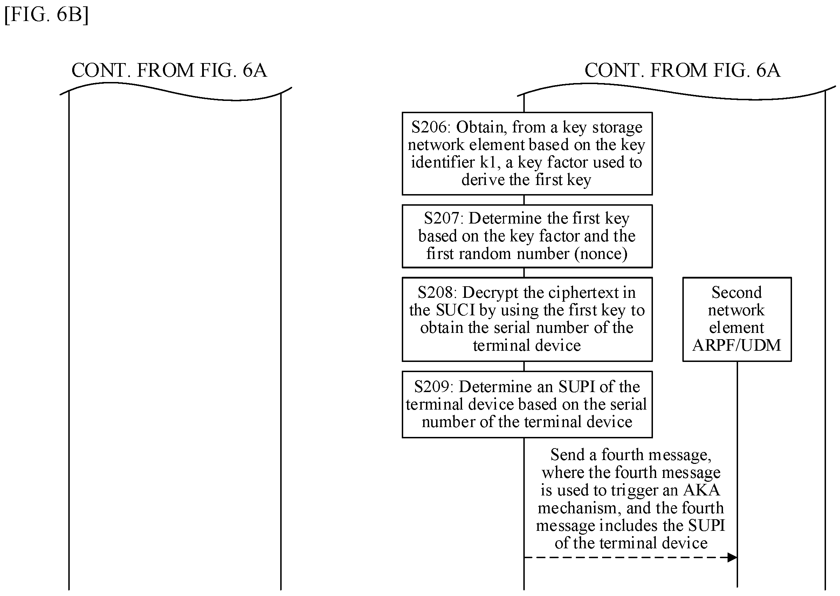

FIG. 6A and FIG. 6B are another schematic flowchart of a communication method according to an embodiment of this application. In this method, a terminal device encrypts a serial number (Serial Number) of the terminal device by using a symmetric key, and an AMF/TMF decrypts the serial number by using the symmetric key and determines an SUPI based on decrypted information.

As shown in FIG. 6A and FIG. 6B, the communication method includes but is not limited to the following steps.

S201: An application function (AF) sends a service request to a first network element (for example, an AMF/TMF), where the service request includes a service indication or terminal device identification information, the service request further includes a key identifier k1, and the service indication or the terminal device identification information is used to determine a terminal device.

Correspondingly, the first network element (for example, the AMF/TMF) receives the service request.

In a possible implementation, the application function (AF) sends the service request to the first network element (for example, the AMF/TMF), where the service request includes the service indication or the terminal device identification information, and the service request further includes the key identifier k1. For example, the AF may send the service request to the first network element through an NEF. The service indication or the terminal device identification information may be used to determine one or more terminal devices. For example, the service request may be used to request some terminal devices to perform some operations. For example, the service request is used to request terminal devices whose terminal device identifiers are in a specific range to perform operations such as inventory or temperature measurement. The key identifier k1 may be used to determine a key factor for deriving a first key or a first key. For a specific determining manner, refer to the following descriptions. For example, the service request may further include the key factor used to derive the first key. The key factor in this embodiment of this application may include all or some parameters/information for deriving/generating the first key. For example, the key factor may be a key element (key element) for deriving the first key, and the first key K_SUCI may be generated by inputting the key factor and an encryption algorithm identifier Algorithm ID into a key derivation function (key derivation function, KDF), that is, K_SUCI = KDF(key element, Algorithm ID).

In a possible implementation, after receiving the service request, the first network element (for example, the AMF/TMF) may generate a first random number (nonce), and may determine one or more terminal devices based on the service request. For a specific determining manner, refer to the related descriptions in the embodiment shown in FIG. 3. Details are not described herein again. For example, the first network element may further store the first random number and the key identifier k1 in the service request. Further, if the service request carries the key factor used to derive the first key, the first network element may also store the key factor for subsequent use. The first network element (for example, the AMF/TMF) may send the generated first random number (nonce) to an access network device (for example, a base station) associated with the one or more terminal devices, so that the access network device (for example, the base station) can send the first random number (nonce) to the one or more determined terminal devices (for example, IoT devices). For clarity, in this embodiment of this application, one terminal device is used as an example for description below.

S202: The access network device (for example, the base station) sends a first message to the terminal device (for example, the IoT device), where the first message includes the first random number (nonce).

Correspondingly, the terminal device (for example, the IoT device) receives the first message.

S203: The terminal device (for example, the IoT device) generates a ciphertext based on the first random number, a serial number of the terminal device, and the first key.

S204: The terminal device (for example, the IoT device) generates an SUCI based on the key identifier k1 and the ciphertext, where the key identifier k1 is used to index the first key.

In a possible implementation, for implementations of step S202 to step S204 in this embodiment of this application, refer to the implementations of step S101 to step S103 in the embodiment shown in FIG. 3. Details are not described herein again.

In a possible implementation, the SUCI generated by the terminal device does not carry the first random number (nonce).

S205: The terminal device (for example, the IoT device) sends a second message to the first network element (for example, the AMF/TMF), where the second message includes the SUCI. The SUCI may be used for identity protection of the terminal device (for example, the IoT device).

Correspondingly, the first network element (for example, the AMF/TMF) receives the second message.

In a possible implementation, the second message may include the SUCI. For example, the second message may be a registration request (registration request) or a response message of a service request (service request), for example, a response message sent by the UE in response to a previous service request on the network side. The registration request may be used by the terminal device to perform registration during initial access.

S206: The first network element (for example, the AMF/TMF) obtains, from a key storage network element based on the key identifier k1, the key factor used to derive the first key.

S207: The first network element (for example, the AMF/TMF) determines the first key based on the key factor and the first random number (nonce).

S208: The first network element (for example, the AMF/TMF) decrypts the ciphertext in the SUCI by using the first key to obtain the serial number of the terminal device.

In a possible implementation, after receiving the second message, the first network element (for example, the AMF/TMF) may determine one or more valid random numbers based on an internal policy of the first network element (for example, whether a timer of a random number expires). For example, each time the first network element generates/sends one random number, one timer may be set for the random number. The first network element maintains one random number cache list. As shown in Table 2, one random number corresponds to one timer. For example, when receiving the second message, the first network element obtains (one or more) random numbers whose timers do not expire in the random number cache list, and these random numbers are valid random numbers. For another example, after a timer of a random number in the random number cache list expires, the first network element may delete the random number from the random number cache list. In this case, when the first network element receives the second message, (one or more) random numbers currently existing in the random number cache list are valid random numbers.

**Table 2**

| Serial number | Random number (Nonce) | Timer (Timer) |
|---|---|---|
| 1 | 100001 | 100 seconds left |
| 2 | 100002 | Expire at 23:59:59 |
| 3 | ... | ... |

It may be understood that, if there are a plurality of valid random numbers, decryption may be attempted for a plurality of times in a subsequent decryption process. In this embodiment of this application, the second message does not carry the first random number (nonce), which can save air interface resources, and is beneficial for a low-power/low-computing-power device.

In a possible implementation, after receiving the second message, the first network element (for example, the AMF/TMF) may split the SUCI in the second message, to obtain the key identifier k1 and the ciphertext (cipher). For example, a correspondence between the key identifier and the key factor may be preconfigured/prestored in the key storage network element. The first network element may obtain, from the key storage network element based on the key identifier k1, the key factor used to derive the first key. It may be understood that the first network element may split the SUCI before determining a valid random number, or may split the SUCI after determining a valid random number, or may split the SUCI simultaneously with determining a valid random number. An execution sequence is not limited in this embodiment of this application. It may be understood that, if the service request includes the key factor used to derive the first key, the first network element may not need to obtain the key factor from the key storage network element.

Further, the first network element may determine one or more keys based on the key factor and the determined one or more valid random numbers (including the first random number). The one or more keys include the first key. It may be understood that, if only one valid random number (that is, the first random number) is determined, the first network element may determine/generate the first key based on the key factor and the first random number. For example, the first network element may determine the one or more keys based on the key factor, the determined one or more valid random numbers (including the first random number), and the key identifier k1 (which may be obtained by splitting the SUCI, or may be carried in the service request), where the one or more keys include the first key.

In a possible implementation, the first network element may separately decrypt the ciphertext (cipher) based on the one or more keys (including the first key), and a key that successfully decrypts the ciphertext is the first key. In other words, the first network element may make a plurality of decryption attempts, and obtain the serial number of the terminal device when the decryption succeeds. It may be understood that, when the first key is determined, the first network element decrypts the ciphertext (cipher) by using the first key to obtain the serial number of the terminal device. In other words, after decrypting the ciphertext (cipher) by using the first key, the first network element retains the serial number of the terminal device, and ignores other content (if any), for example, the first random number (nonce) and/or the second random number (RAND). It may be understood that a manner of decrypting the ciphertext (cipher) by using the key is an inverse operation of generating the ciphertext (cipher).

In a possible implementation, before step S208, the first network element may perform integrity check on the SUCI or other content (for example, the type of the SUPI, the home network identifier of the terminal device, or the key identifier k1) other than the MAC (message authentication code) in the SUCI by using the MAC in the SUCI. When the integrity check succeeds, step S208 is performed. If the integrity check fails, the first network element (for example, the AMF/TMF) may return a response to the terminal device, to indicate that the registration of the terminal device fails. The response may further carry a registration failure cause, for example, the integrity check fails.

S209: The first network element (for example, the AMF/TMF) determines the SUPI of the terminal device based on the serial number of the terminal device. The SUPI may be used for AKA authentication of the terminal device.

In a possible implementation, for an implementation of step S209 in this embodiment of this application, refer to the implementation of step S107 in the embodiment shown in FIG. 3. Details are not described herein again.

In a possible implementation, after obtaining the SUPI, the first network element (for example, the AMF/TMF) may send a fourth message to the second network element (for example, the ARPF/UDM). The fourth message may be used to trigger an AKA mechanism. The fourth message includes the SUPI of the terminal device. For example, the fourth message may be an authentication request (for example, Nausf_UEauthentication_authenticate).

In a possible implementation, the second network element (for example, the ARPF/UDM) may send an authentication response (authentication response) to the first network element (for example, the AMF/TMF), to indicate an identity authentication result of the terminal device. After receiving the authentication response, the first network element (for example, the AMF/TMF) may send a registration response (Registration response) to the terminal device, to indicate a registration result of the terminal device.

In a possible implementation, after obtaining the SUPI, the first network element (for example, the AMF/TMF) may determine, based on a local policy and/or the service indication in the service request, whether to perform the authentication and key agreement (AKA) mechanism. For example, if the service indication in the service request indicates that an operation is performed on the IoT device, the first network element may determine to perform the authentication and key agreement (AKA) mechanism. Alternatively, the local policy indicates that IoT devices in some IoT ID numbers perform the authentication and key agreement (AKA) mechanism. In this case, when the service indication in the service request indicates that an operation is performed on the IoT devices in these IoT ID numbers, the first network element may determine to perform the authentication and key agreement (AKA) mechanism. If determining to perform the AKA mechanism, the first network element may send the fourth message to the second network element, to trigger the AKA mechanism.

In this embodiment of this application, the first network element performs decryption and determines the SUPI based on decrypted information, so that a subsequent authentication process, such as the AKA mechanism, can be better reused, and behavior of the second network element does not need to be changed.

In a possible implementation, before sending the fourth message to the second network element, the first network element may determine whether the SUPI is valid. For example, the first network element may determine, based on a preconfiguration (for example, a preconfigured list of relationships between a key identifier and an SUPI), whether the SUPI of the terminal device is valid. For example, if an SUPI corresponding to the key identifier k1 in the relationship list is the same as the SUPI of the terminal device, it indicates that the SUPI of the terminal device is valid. When the SUPI is valid, the first network element may send the fourth message to the second network element, to trigger the authentication and key agreement AKA mechanism.

In this embodiment of this application, the symmetric key is used for encryption and decryption, and a public key encryption algorithm (for example, an elliptic curve integrated encryption scheme (elliptic curve integrated encryption scheme, ECIES)) and/or a public key generation algorithm are/is not required, so that power consumption of the terminal device can be reduced, and a power consumption requirement of the low-power or low-computing-power device can be met. In this embodiment of this application, the random number (nonce) is further added to the ciphertext, so that freshness of the ciphertext can be increased, and security of the low-power or low-computing-power device can be improved. This application enables the protection of a permanent identifier of the low-power or low-computing-power device while meeting its power consumption requirements, thereby improving device security.

The foregoing content describes in detail the methods in this application. To better implement the foregoing solutions in embodiments of this application, embodiments of this application further provide a corresponding apparatus or device.

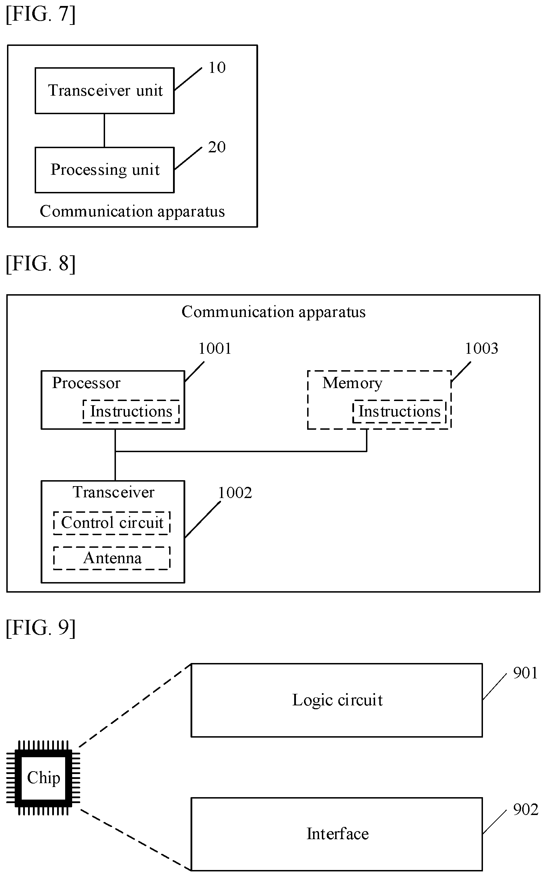

In embodiments of this application, the terminal device, the first network element, and the second network element in this application may be divided into functional modules based on the foregoing method examples, and the foregoing network element is also divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used. The following describes in detail communication apparatuses in embodiments of this application with reference to FIG. 7 to FIG. 9.

FIG. 7 is a diagram of a structure of a communication apparatus according to an embodiment of this application. As shown in FIG. 7, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface or a communication unit.

In some embodiments of this application, the communication apparatus may be the terminal device described above. The communication apparatus shown in FIG. 7 may be configured to perform steps, functions, or the like performed by the terminal device in the foregoing method embodiments. For example, the communication apparatus may be a terminal device, or a chip or a functional module configured in the terminal device. This is not limited in this embodiment of this application. The transceiver unit 10 is configured to perform operations related to receiving and sending of the terminal device in the foregoing method embodiments, and the processing unit 20 is configured to perform operations related to processing of the terminal device in the foregoing method embodiments.

For example, the transceiver unit 10 is configured to receive a first message, where the first message includes a first random number; and the transceiver unit 10 is further configured to send a second message, where the second message includes an SUCI, the SUCI is generated based on a key identifier and a ciphertext, the key identifier is used to index a first key, and the ciphertext is generated based on the first random number, a serial number of the terminal device, and the first key.

For example, the processing unit 20 is configured to generate the ciphertext based on the first random number, the serial number of the terminal device, and the first key.

For example, the processing unit 20 is further configured to generate the SUCI based on the ciphertext and the key identifier.

For example, the processing unit 20 is further configured to generate various messages sent by the transceiver unit 10, for example, a second message. The processing unit 20 may be further configured to control the transceiver unit 10 to send or receive various messages.

For example, the second message includes the first random number.

For example, the SUCI is further generated based on one or more of the following: a type of the SUPI, a home network identifier of the terminal device, the first random number, or a message authentication code.

For example, the ciphertext is further generated based on a second random number.

For example, the processing unit 20 is specifically configured to encrypt, by using a second key, a concatenation of the serial number of the terminal device and the second random number to obtain the ciphertext. The second key is generated based on the first key and the first random number.

For example, the processing unit 20 is specifically configured to encrypt, by using the first key, a concatenation of the serial number of the terminal device, the second random number, and the first random number to obtain the ciphertext.

For example, the first message is a selection message, and the selection message is used to trigger an access procedure of the terminal device.

For example, the first message is a random access response or a radio resource control connection setup message in an access procedure; or the first message is a NAS message.

For example, the transceiver unit 10 is further configured to receive a third message from an AF, where the third message includes the key identifier and the first key.

For example, the serial number is a mobile subscriber identification number (MSIN).

In this embodiment of this application, for specific descriptions of the first message, the second message, the ciphertext, the SUCI, the third message, the network elements, and the like, refer to the foregoing method embodiments. Details are not described herein again.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effects in this embodiment of this application, refer to the technical effects in the foregoing method embodiments. For brevity, details are not described herein again.

Reusing FIG. 7, in some other embodiments of this application, the communication apparatus may be the first network element described above. That is, the communication apparatus shown in FIG. 7 may be configured to perform steps, functions, or the like performed by the first network element in the foregoing method embodiments. For example, the communication apparatus may be the first network element, or a chip or a functional module configured in the first network element. This is not limited in this embodiment of this application. The transceiver unit 10 is configured to perform operations related to receiving and sending of the first network element in the foregoing method embodiments, and the processing unit 20 is configured to perform operations related to processing of the first network element in the foregoing method embodiments.

For example, the transceiver unit 10 is configured to send a first random number to a terminal device through an access network device, where the first random number is used to generate a ciphertext; and the transceiver unit 10 is further configured to receive a second message from the terminal device, where the second message includes an SUCI, the SUCI is generated based on a key identifier and the ciphertext, the key identifier is used to index a first key, and the first key is used to decrypt the ciphertext to obtain a serial number of the terminal device.

For example, the processing unit 20 is configured to generate a first random number. The processing unit 20 may be further configured to control the transceiver unit 10 to receive or send various messages.

For example, the transceiver unit 10 is further configured to receive a service request from an AF, where the service request includes a service indication or terminal device identification information, and the service indication or the terminal device identification information is used to determine the terminal device.

For example, the second message includes the first random number.

For example, the SUCI is further generated based on one or more of the following: a type of an SUPI, a home network identifier of the terminal device, the first random number, or a message authentication code.

For example, the transceiver unit 10 is further configured to: when the first random number included in the second message is valid, send an authentication request to a second network element, where the authentication request includes the SUCI. The second network element is determined based on the home network identifier of the terminal device in the SUCI.

For example, the authentication request further includes one or more of the following: indication information or the first random number. The indication information indicates that the SUCI is an identifier of a low-power device or a low-computing-power device.

For example, the service request further includes the key identifier.

For example, the processing unit 20 is further configured to obtain, from a key storage network element based on the key identifier, a key factor used to derive the first key; and the processing unit 20 is further configured to determine the first key based on the key factor and the first random number.

For example, the processing unit 20 is further specifically configured to: determine one or more valid random numbers, and determine one or more keys based on the key factor and the one or more random numbers; and decrypt the ciphertext based on the one or more keys, and determine a key that successfully decrypts the ciphertext as the first key.

For example, the processing unit 20 is further configured to decrypt the ciphertext by using the first key to obtain the serial number of the terminal device; and the processing unit 20 is further configured to determine the SUPI of the terminal device based on the serial number of the terminal device.

For example, the transceiver unit 10 is further configured to send a fourth message to the second network element, where the fourth message includes the SUPI, and the fourth message is used to trigger an AKA mechanism.

For example, the processing unit 20 is further configured to determine, based on a preconfigured correspondence between the key identifier and the SUPI, that the SUPI is valid; and the transceiver unit 10 is further specifically configured to send the fourth message to the second network element when the SUPI is valid.

For example, the serial number is a mobile subscriber identification number (MSIN).

In this embodiment of this application, for specific descriptions of the second message, the ciphertext, the SUCI, the fourth message, the SUPI, the network elements, and the like, refer to the foregoing method embodiments. Details are not described herein again.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effects in this embodiment of this application, refer to the technical effects in the foregoing method embodiments. For brevity, details are not described herein again.

Reusing FIG. 7, in some other embodiments of this application, the communication apparatus may be the second network element described above. That is, the communication apparatus shown in FIG. 7 may be configured to perform steps, functions, or the like performed by the second network element in the foregoing method embodiments. For example, the communication apparatus may be the second network element, or a chip or a functional module configured in the second network element. This is not limited in this embodiment of this application. The transceiver unit 10 is configured to perform operations related to receiving and sending of the second network element in the foregoing method embodiments, and the processing unit 20 is configured to perform operations related to processing of the second network element in the foregoing method embodiments.

For example, the transceiver unit 10 is configured to receive an authentication request from a first network element, where the authentication request includes an SUCI, the SUCI is generated based on a key identifier and a ciphertext, and the key identifier is used to index a first key; the processing unit 20 is configured to decrypt the ciphertext by using the first key to obtain a serial number of a terminal device; and the processing unit 20 is further configured to determine an SUPI of the terminal device based on the serial number of the terminal device.

For example, the processing unit 20 is further configured to: generate an authentication vector based on a master key corresponding to the SUPI, and perform an AKA mechanism.

For example, the processing unit 20 is further configured to determine, based on a preconfigured correspondence between the key identifier and the SUPI, that the SUPI is valid; and the processing unit 20 is further specifically configured to: when the SUPI is valid, generate the authentication vector based on the master key corresponding to the SUPI.

For example, the authentication request further includes one or more of the following: indication information or a first random number. The indication information indicates that the SUCI is an identifier of a low-power device or a low-computing-power device.

For example, the transceiver unit 10 is further configured to receive a key generation request from an AF, where the key generation request includes the key identifier; the processing unit 20 is further configured to generate one or more keys based on the key identifier; and the transceiver unit 10 is further configured to send a key generation response to the AF, where the key generation response includes the one or more keys, and the one or more keys include the first key.

For example, the key generation request further includes one or more home network identifiers, and the one or more home network identifiers are used to generate the one or more keys with reference to the key identifier.

In this embodiment of this application, for specific descriptions of the authentication request, the SUCI, the SUPI, the key generation request, the key generation response, the network elements, and the like, refer to the foregoing method embodiments (as shown in FIG. 3). Details are not described herein again.

It may be understood that the specific descriptions of the transceiver unit and the processing unit in this embodiment of this application are merely examples. For specific functions, steps, or the like performed by the transceiver unit and the processing unit, refer to the foregoing method embodiments (as shown in FIG. 3). Details are not described herein again. In addition, for technical effects in this embodiment of this application, refer to the technical effects in the foregoing method embodiments (as shown in FIG. 3). For brevity, details are not described herein again.

The foregoing describes the communication apparatus in embodiments of this application, and the following describes a possible product form of the communication apparatus. It should be understood that any form of product that has functions of the communication apparatus in FIG. 7 falls within the protection scope of embodiments of this application. It should be further understood that the following descriptions are merely examples, and do not limit a product form of the communication apparatus in embodiments of this application.

In a possible implementation, in the communication apparatus shown in FIG. 7, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In embodiments of this application, the processor and the transceiver may be coupled, or the like. A connection manner of the processor and the transceiver is not limited in embodiments of this application. In a process of performing the foregoing methods, a process of sending information in the foregoing methods may be understood as a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing methods may be understood as a process of receiving the input information by the processor. When the processor receives the input information, the transceiver receives the information, and inputs the information into the processor. Further, after the transceiver receives the information, other processing may need to be performed on the information before processed information is entered into the processor.

FIG. 8 is a diagram of another structure of a communication apparatus according to an embodiment of this application. As shown in FIG. 8, the communication apparatus provided in this embodiment of this application may be configured to implement the method described in any one of the foregoing method embodiments. For details, refer to the descriptions in the foregoing method embodiments. The communication apparatus may be the foregoing terminal device, first network element, or second network element, or a chip or a circuit therein. For example, the communication apparatus includes one or more processors 1001 and a transceiver 1002. The communication apparatus may further include a memory 1003. In an implementation, the communication apparatus further includes an input/output apparatus (not shown in the figure).

The processor 1001 is mainly configured to process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform steps, methods, or functions performed by the terminal device in the foregoing method embodiment 1 (as shown in FIG. 3), the processor 1001 may be configured to perform step S102 and step S103 in FIG. 3, and/or configured to perform another process of the technology described in this specification; and the transceiver 1002 may be configured to perform step S104 in FIG. 3, and/or configured to perform another process of the technology described in this specification.

For example, when the communication apparatus is configured to perform steps, methods, or functions performed by the first network element in the foregoing method embodiment 1 (as shown in FIG. 3), the processor 1001 may be configured to generate a first random number and an authentication request, and/or configured to perform another process of the technology described in this specification; and the transceiver 1002 may be configured to perform step S105 in FIG. 3, and/or configured to perform another process of the technology described in this specification.

For example, when the communication apparatus is configured to perform steps, methods, or functions performed by the second network element in the foregoing method embodiment 1 (as shown in FIG. 3), the processor 1001 may be configured to perform step S106 and step S107 in FIG. 3, and/or configured to perform another process of the technology described in this specification; and the transceiver 1002 may be configured to receive the authentication request, and/or configured to perform another process of the technology described in this specification.

For example, when the communication apparatus is configured to perform steps, methods, or functions performed by the access network device in the foregoing method embodiment 1 (as shown in FIG. 3), the processor 1001 may be configured to obtain a first message, and/or configured to perform another process of the technology described in this specification; and the transceiver 1002 may be configured to perform step S101 in FIG. 3, and/or configured to perform another process of the technology described in this specification.

For example, when the communication apparatus is configured to perform steps, methods, or functions performed by the terminal device in the foregoing method embodiment 2 (as shown in FIG. 6A and FIG. 6B), the processor 1001 may be configured to perform step S203 and step S204 in FIG. 6A and FIG. 6B, and/or configured to perform another process of the technology described in this specification; and the transceiver 1002 may be configured to perform step S205 in FIG. 6A and FIG. 6B, and/or configured to perform another process of the technology described in this specification.

For example, when the communication apparatus is configured to perform steps, methods, or functions performed by the first network element in the foregoing method embodiment 2 (as shown in FIG. 6A and FIG. 6B), the processor 1001 may be configured to perform step S206 to step S209 in FIG. 6A and FIG. 6B, and/or configured to perform another process of the technology described in this specification; and the transceiver 1002 may be configured to send a fourth message, and/or configured to perform another process of the technology described in this specification.

For example, when the communication apparatus is configured to perform steps, methods, or functions performed by the AF network element in the foregoing method embodiment 2 (as shown in FIG. 6A and FIG. 6B), the processor 1001 may be configured to generate a service request, and/or configured to perform another process of the technology described in this specification; and the transceiver 1002 may be configured to perform step S201 in FIG. 6A and FIG. 6B, and/or configured to perform another process of the technology described in this specification.

For example, when the communication apparatus is configured to perform steps, methods, or functions performed by the access network device in the foregoing method embodiment 2 (as shown in FIG. 6A and FIG. 6B), the processor 1001 may be configured to obtain a first message, and/or configured to perform another process of the technology described in this specification; and the transceiver 1002 may be configured to perform step S202 in FIG. 6A and FIG. 6B, and/or configured to perform another process of the technology described in this specification.

In any one of the foregoing implementations, the processor 1001 may include a transceiver configured to implement a receiving function and a sending function. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions, and the instructions may be a computer program. The computer program is run on the processor 1001, to enable the communication apparatus to perform the method described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those in FIG. 8. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 7, the processing unit 20 may be one or more logic circuits, and the transceiver unit 10 may be an input/output interface, or also referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 9 is a diagram of still another structure of a communication apparatus according to an embodiment of this application. As shown in FIG. 9, the communication apparatus shown in FIG. 9 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip, and the chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform methods, functions, or steps performed by the terminal device in the foregoing method embodiments, the interface 902 is configured to input a first message, where the first message includes a first random number; and the interface 902 is further configured to output a second message, where the second message includes an SUCI, the SUCI is generated based on a key identifier and a ciphertext, the key identifier is used to index a first key, and the ciphertext is generated based on the first random number, a serial number of the terminal device, and the first key. For example, the logic circuit 901 is configured to generate the ciphertext and the SUCI.

For example, when the communication apparatus is configured to perform methods, functions, or steps performed by the first network element in the foregoing method embodiments, the logic circuit 901 is configured to generate a first random number; the interface 902 is configured to output the first random number, where the first random number is used to generate a ciphertext; and the interface 902 is further configured to input a second message, where the second message includes an SUCI, the SUCI is generated based on a key identifier and the ciphertext, the key identifier is used to index a first key, and the first key is used to decrypt the ciphertext to obtain a serial number of a terminal device.

For example, when the communication apparatus is configured to perform methods, functions, or steps performed by the second network element in the foregoing method embodiments, the interface 902 is configured to input an authentication request, where the authentication request includes an SUCI, the SUCI is generated based on a key identifier and a ciphertext, and the key identifier is used to index a first key; the logic circuit 901 is configured to decrypt the ciphertext by using the first key to obtain a serial number of a terminal device; and the logic circuit 901 is further configured to decrypt the SUPI of the terminal device based on the serial number of the terminal device.

In this embodiment of this application, for specific descriptions of the first message, the second message, the ciphertext, the SUCI, the SUPI, the authentication request, and the like, refer to the foregoing method embodiments. Details are not described herein again.

It can be understood that the communication apparatus shown in this embodiment of this application may implement the methods provided in embodiments of this application in a form of hardware, or may implement the methods provided in embodiments of this application in a form of software. This is not limited in this embodiment of this application.

For specific implementations of the embodiment shown in FIG. 9, refer to the foregoing embodiments. Details are not described herein again.

An embodiment of this application further provides a communication system. The communication system includes at least two of a terminal device, a first network element, and a second network element. The at least two of the terminal device, the first network element, and the second network element may be configured to perform the methods in the foregoing method embodiments.

In addition, this application further provides a computer program. The computer program is used to implement operations and/or processing performed by the terminal device in the methods provided in this application.

This application further provides a computer program. The computer program is configured to implement operations and/or processing performed by the first network element in the methods provided in this application.

This application further provides a computer program. The computer program is configured to implement operations and/or processing performed by the second network element in the methods provided in this application.

This application further provides a computer-readable storage medium. The computer-readable storage medium stores computer code. When the computer code is run on a computer, the computer is enabled to perform operations and/or processing performed by the terminal device in the methods provided in this application.

This application further provides a computer-readable storage medium. The computer-readable storage medium stores computer code. When the computer code is run on a computer, the computer is enabled to perform operations and/or processing performed by the first network element in the methods provided in this application.

This application further provides a computer-readable storage medium. The computer-readable storage medium stores computer code. When the computer code is run on a computer, the computer is enabled to perform operations and/or processing performed by the second network element in the methods provided in this application.

This application further provides a computer program product. The computer program product includes computer code or a computer program. When the computer code or the computer program is run on a computer, operations and/or processing performed by the terminal device in the methods provided in this application are/is performed.

This application further provides a computer program product. The computer program product includes computer code or a computer program. When the computer code or the computer program is run on a computer, operations and/or processing performed by the first network element in the methods provided in this application are/is performed.

This application further provides a computer program product. The computer program product includes computer code or a computer program. When the computer code or the computer program is run on a computer, operations and/or processing performed by the second network element in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first message, wherein the first message comprises a first random number; and
sending, by the terminal device, a second message to a first network element, wherein the second message comprises a subscription concealed identifier SUCI, the SUCI is generated based on a key identifier and a ciphertext, the key identifier is used to index a first key, and the ciphertext is generated based on the first random number, a serial number of the terminal device, and the first key.

2. The method according to claim 1, wherein the second message comprises the first random number.

3. The method according to claim 1 or 2, wherein the SUCI is further generated based on one or more of the following: a type of a subscription permanent identifier SUPI, a home network identifier of the terminal device, the first random number, or a message authentication code.

4. The method according to any one of claims 1 to 3, wherein the ciphertext is further generated based on a second random number.

5. The method according to claim 4, wherein the ciphertext is obtained by encrypting,
based on a second key, a concatenation of the serial number of the terminal device and the second random number, and the second key is generated based on the first key and the first random number; or
the ciphertext is obtained by encrypting, based on the first key, a concatenation of the serial number of the terminal device, the second random number, and the first random number.

6. The method according to any one of claims 1 to 5, wherein the first message is a system information broadcast SIB message, and the SIB message is used to trigger an access procedure of the terminal device.

7. The method according to any one of claims 1 to 5, wherein the first message is a
random access response or a radio resource control connection setup message in an access procedure; or
the first message is a non-access stratum NAS message.

8. The method according to any one of claims 1 to 7, wherein before receiving, by the terminal device, the first message, the method further comprises:
receiving, by the terminal device, a third message from an application function AF, wherein the third message comprises the key identifier and the first key.

9. The method according to any one of claims 1 to 8, wherein the terminal device is an IoT device.

10. The method according to any one of claims 1 to 9, wherein the serial number is a mobile subscriber identification number.

11. A communication method, comprising:
sending, by a first network element, a first random number to a terminal device through an access network device, wherein the first random number is used to generate a ciphertext; and
receiving, by the first network element, a second message from the terminal device, wherein the second message comprises a subscription concealed identifier SUCI, the SUCI is generated based on a key identifier and the ciphertext, the key identifier is used to index a first key, and the first key is used to decrypt the ciphertext to obtain a serial number of the terminal device.

12. The method according to claim 9, wherein before sending, by the first network element, the first random number to the terminal device through the access network device, the method further comprises:
receiving, by the first network element, a service request from an application function AF, wherein the service request comprises a service indication or terminal device identification information, and the service indication or the terminal device identification information is used to determine the terminal device.

13. The method according to claim 11 or 12, wherein the second message comprises the first random number.

14. The method according to any one of claims 11 to 13, wherein the SUCI is further generated based on one or more of the following: a type of a subscription permanent identifier SUPI, a home network identifier of the terminal device, the first random number, or a message authentication code.

15. The method according to any one of claims 11 to 14, wherein after receiving, by the first network element, the second message from the terminal device, the method further comprises:
when the first random number comprised in the second message is valid, sending, by the first network element, an authentication request to a second network element, wherein the authentication request comprises the SUCI, and the second network element is determined based on the home network identifier of the terminal device in the SUCI.

16. The method according to claim 15, wherein the authentication request further
comprises one or more of the following: indication information or the first random number, wherein
the indication information indicates that the SUCI is an identifier of a low-power device or a low-computing-power device.

17. The method according to claim 12, wherein the service request further comprises the key identifier.

18. The method according to claim 17, wherein after receiving, by the first network element, the second message from the terminal device, the method further comprises:
obtaining, by the first network element from a key storage network element based on the key identifier, a key factor used to derive the first key; and
determining, by the first network element, the first key based on the key factor and the first random number.

19. The method according to claim 18, wherein determining, by the first network element, the first key based on the key factor and the first random number comprises:
determining, by the first network element, one or more valid random numbers, and determining one or more keys based on the key factor and the one or more random numbers; and
decrypting, by the first network element, the ciphertext based on the one or more keys, and determining a key that successfully decrypts the ciphertext as the first key.

20. The method according to any one of claims 11 to 14 or 17 to 19, wherein after receiving, by the first network element, the second message from the terminal device, the method further comprises:
decrypting, by the first network element, the ciphertext using the first key to obtain the serial number of the terminal device, wherein the serial number is used to determine the subscription permanent identifier SUPI of the terminal device.

21. The method according to claim 20, wherein after decrypting, by the first network element, the ciphertext using the first key to obtain the serial number of the terminal device, the method further comprises:
determining, by the first network element, the subscription permanent identifier SUPI of the terminal device based on the serial number of the terminal device.

22. The method according to claim 21, wherein after determining, by the first network element, the subscription permanent identifier SUPI of the terminal device based on the serial number of the terminal device, the method further comprises:
sending, by the first network element, a fourth message to the second network element, wherein the fourth message comprises the SUPI, and the fourth message is used to trigger an authentication and key agreement AKA mechanism.

23. The method according to claim 22, wherein before sending, by the first network element, the fourth message to the second network element, the method further comprises:
determining, by the first network element based on a correspondence between the key identifier and the SUPI, that the SUPI is valid; and
sending, by the first network element, the fourth message to the second network element comprises: sending, by the first network element, the fourth message to the second network element when the SUPI is valid.

24. The method according to any one of claims 11 to 23, wherein the serial number is a mobile subscriber identification number.

25. A communication method, comprising:
receiving, by a second network element, an authentication request from a first network element, wherein the authentication request comprises a subscription concealed identifier SUCI, the SUCI is generated based on a key identifier and a ciphertext, and the key identifier is used to index a first key;
decrypting, by the second network element, the ciphertext using the first key to obtain a serial number of a terminal device; and
determining, by the second network element, a subscription permanent identifier SUPI of the terminal device based on the serial number of the terminal device.

26. The method according to claim 25, wherein determining, by the second network element, the subscription permanent identifier SUPI of the terminal device based on the serial number of the terminal device comprises:
obtaining by the second network element, the SUPI of the terminal device by recombining and concatenating the serial number of the terminal device with plaintext in the SUCI.

27. The method according to claim 26, wherein the plaintext in the SUCI comprises one or more of the following: a type of the SUPI, a home network identifier of the terminal device, a routing indicator, the key identifier, or a first random number, wherein the first random number is used to generate the ciphertext.

28. The method according to any one of claims 25 to 27, wherein after decrypting, by the second network element, the ciphertext using the first key to obtain the serial number of the terminal device, the method further comprises:
generating, by the second network element, an authentication vector based on a master key corresponding to the SUPI, and performing an authentication and key agreement AKA mechanism.

29. The method according to claim 28, wherein before generating, by the second network element, the authentication vector based on the master key corresponding to the SUPI, the method further comprises:
determining, by the second network element based on a preconfigured correspondence between the key identifier and the SUPI, that the SUPI is valid.

30. The method according to any one of claims 25 to 29, wherein before receiving, by the second network element, the authentication request from the first network element, the method further comprises:
receiving, by the second network element, a key generation request from an application function AF, wherein the key generation request comprises the key identifier;
generating, by the second network element, one or more keys based on the key identifier; and
sending, by the second network element, a key generation response to the AF, wherein the key generation response comprises the one or more keys, and the one or more keys comprise the first key.

31. A communication method, comprising:
sending, by a first network element, a first random number to a terminal device through an access network device; and
sending, by the terminal device, a second message to the first network element, wherein the second message comprises a subscription concealed identifier SUCI, the SUCI is generated based on a key identifier and a ciphertext, the key identifier is used to index a first key, and the ciphertext is generated based on the first random number, a serial number of the terminal device, and the first key.

32. The method according to claim 31, wherein the second message comprises the first random number.

33. The method according to claim 31 or 32, wherein the SUCI is further generated based on one or more of the following: a type of a subscription permanent identifier SUPI, a home network identifier of the terminal device, the first random number, or a message authentication code.

34. The method according to any one of claims 31 to 33, wherein before sending, by the first network element, the first random number to the terminal device through the access network device, the method further comprises:
receiving, by the first network element, a service request from an application function AF, wherein the service request comprises a service indication or terminal device identification information, and the service indication or the terminal device identification information is used to determine the terminal device.

35. The method according to any one of claims 31 to 34, wherein after sending, by the terminal device, the second message to the first network element, the method further comprises:
when the first random number contained in the second message is valid, sending, by the first network element, an authentication request to a second network element, wherein the authentication request comprises the SUCI, and the second network element is determined based on the home network identifier of the terminal device in the SUCI;
decrypting, by the second network element, the ciphertext using the first key to obtain the serial number of the terminal device; and
determining, by the second network element, the subscription permanent identifier SUPI of the terminal device based on the serial number of the terminal device.

36. The method according to claim 35, wherein the authentication request further
comprises one or more of the following: indication information or the first random number, wherein
the indication information indicates that the SUCI is an identifier of a low-power device or a low-computing-power device.

37. The method according to any one of claims 32 to 36, wherein after sending, by the terminal device, the second message to the first network element, the method further comprises:
sending, by the first network element, a fourth message to the second network element, wherein the fourth message comprises the SUPI, and the fourth message is used to trigger an authentication and key agreement AKA mechanism; and
generating, by the second network element, an authentication vector based on a master key corresponding to the SUPI, and performing an authentication and key agreement AKA mechanism.

38. The method according to claim 37, wherein before sending, by the first network element, the fourth message to the second network element, the method further comprises:
determining, by the first network element based on a correspondence between the key identifier and the SUPI, that the SUPI is valid.

39. A communication apparatus, comprising a unit or a module configured to perform the method according to any one of claims 1 to 30.

40. A readable storage medium, wherein the readable storage medium stores program instructions, and when the program instructions are run on a communication apparatus, the communication apparatus is enabled to perform the method according to any one of claims 1 to 30.

41. A communication system, comprising one or more of the following: a terminal device configured to perform the method according to any one of claims 1 to 10, a first network element configured to perform the method according to any one of claims 11 to 24, or a second network element configured to perform the method according to any one of claims 25 to 30.

42. A program product, comprising instructions, wherein when the instructions are run, the method according to any one of claims 1 to 30 is performed.

43. A communication apparatus, comprising a processor, wherein the processor is configured to read and execute a program stored in a memory, to perform the method according to any one of claims 1 to 30.
